# EUROPÄISCHE PATENTSCHRIFT

(11) **EP 0 488 090 B1**
(45) Veröffentlichungstag und Bekanntmachung des Hinweises auf die Patenterteilung: **04.09.1996**
(21) Anmeldenummer: 91120007.9
(22) Anmeldetag: 23.11.1991
(51) Int. Cl.: C07F 5/04, C11D 3/395, C11D 7/54, C11D 7/56, A01N 55/08

(54) **Stabile feste Acetylperoxyborat-Verbindungen**
Stable and solid acetylperoxyborate compounds
Composés acétylperoxyborate solides et stabiles

(30) Priorität: 30.11.1990 DE 4038202; 02.11.1991 DE 4136172
(43) Veröffentlichungstag der Anmeldung: 03.06.1992
(73) Patentinhaber: Solvay Interox GmbH, D-30625 Hannover (DE)
(72) Erfinder: Rösler, Richard, W-5456 Rheinbrohl (DE); Schelle, Siegfried, W-8039 Puchheim (DE); Gnann, Michael, W-8024 Deisenhofen (DE); Zeiss, Werner, W-8023 Pullach (DE); Harrison, Paul Richard, W-5462 Bad Hönningen (DE)
(74) Vertreter: Lauer, Dieter, Dr.

(56) Entgegenhaltungen:
- DE-A- 2 227 602
- DE-A- 2 301 235
- DE-A- 2 614 148
- DE-A- 2 636 037
- US-A- 3 640 879
- US-A- 4 133 637

## Beschreibung

Die Erfindung bezieht sich auf neue stabile feste Acetylperoxyborat-Verbindungen (Aktivsauerstoff-haltige Verbindungen auf Basis von Essigsäure und Borsauerstoffverbindungen), auf ein Verfahren zu ihrer Herstellung und auf Wasch-, Bleich-, Reinigungs- und Desinfektionsmittelzusammensetzungen sowie Oxidationsmittel für die organische Synthese, die diese Acetylperoxyborat-Verbindungen enthalten.

In Wasch-, Bleich- und Reinigungsmitteln, insbesondere solchen für Textilien, in Desinfektionsmitteln sowie als Oxidationsmittel finden sowohl anorganische als auch organische Aktivsauerstoffverbindungen Verwendung. Beispiele hierfür sind Perborate, Persulfate, Mono- und Diperoxycarbonsäuren sowie insbesondere solche Perborat/Aktivator-Kombinationen, aus welchen meist Peressigsäure in situ gebildet wird.

Die Peroxycarbonsäuren, wie z.B. Diperoxydodecandisäure (DPDDA) oder Peressigsäure, und Perborat/Aktivator-Kombinationen, wie z.B. Perborat/TAED-Systeme, zeichnen sich gegenüber rein anorganischen Perverbindungen wie z.B. Perborat durch ihre niedrigere Wirkungstemperatur und höhere Bleich- und Desinfektionskraft aus. Ferner ist es im Stand der Technik bekannt, Perborate und Peroxycarbonsäuren als Oxidationsmittel in der chemischen Synthese zur Oxidation von organischen Verbindungen einzusetzen.

Der Einsatz von geeigneten Peroxycarbonsäuren für die oben genannten Anwendungen ist daher zunehmend erwünscht. Obwohl jedoch mit der Entwicklung und Bereitstellung von Peroxycarbonsäuren bzw. von Kombinationen aus Perboraten und Peroxycarbonsäure-bildenden Aktivatoren bereits Fortschritte in der Anwendung von Peroxycarbonsäuren erzielt wurden, sind im Stand der Technik hinsichtlich der Anwendung von Peroxycarbonsäuren bzw. Peroxycarbonsäure-bildenden Aktivatoren noch immer Nachteile zu beheben.

Für viele Anwendungen kommen im allgemeinen nur bei Raumtemperatur feste Peroxycarbonsäuren in Frage, d.h. längerkettige aliphatische Peroxycarbonsäuren wie z.B. DPDDA, die dann aber eine schlechte Wasserlöslichkeit besitzen. Ferner sind Peroxycarbonsäuren in reinem oder hochkonzentriertem Zustand thermisch und mechanisch sensibel und feste Peroxycarbonsäuren müssen daher durch geeignete Phlegmatisierungsmittel, z.B. hydratbildende anorganische Salze wie insbesondere Natriumsulfat, stabilisiert werden. Nachteilig ist hierbei auch, daß die Stabilität der phlegmatisierten festen Peroxycarbonsäuren sowohl durch die Art und Weise der Peroxycarbonsäureherstellung als auch der Phlegmatisierung erheblich beeinflußt wird. Darüber hinaus können die langkettigen Peroxycarbonsäuren aufgrund der langen Kohlenwasserstoffkette eine Umweltbeeinträchtigung darstellen.

Die Peressigsäure ist demgegenüber als kurzkettige Peroxycarbonsäure mit nur 2 C-Atomen für die Umwelt unbedenklich und zeichnet sich auch durch gute Wasserlöslichkeit aus. Ein Nachteil der Peressigsäure besteht jedoch darin, daß diese bei Raumtemperatur flüssig ist und sich darüber hinaus nur als Lösung von Peressigsäure in Essigsäure, nicht jedoch in reinem Zustand herstellen läßt. Hierdurch werden die Möglichkeiten für einen Einsatz der Peressigsäure als solche eingeschränkt. Im Stand der Technik wurden daher zur Behebung dieses Nachteils Aktivatoren wie z.B. Tetraacetylethylendiamin (TAED) entwickelt (siehe z.B. DE-A-2301235, Seite 1), die in Gegenwart von Persalzen wie z.B. Perborat zur in situ-Bildung von Peressigsäure befähigt sind. Hierbei ist es jedoch nachteilig, daß aus dem Persalz zunächst H₂O₂ gebildet werden muß, welches erst anschließend durch Umsetzung mit dem Aktivator die Peressigsäure freisetzt. Die Bildung der Peressigsäure kann jedoch durch vorzeitige Zersetzung des in situ gebildeten Wasserstoffperoxids beeinträchtigt werden. Um die Vorteile der Peressigsäure besser nutzen zu können, besteht daher ein Bedarf an einfachen, stabilen und nicht zerfließlichen, oxidierend bzw. bleichend wirkenden Aktivsauerstoff-Verbindungen auf Basis der kurzkettigen Essigsäure.

Es bestand daher die Aufgabe, die Nachteile des Standes der Technik zu überwinden und sicher handhabbare sowie chemisch als auch physikalisch stabile Aktivsauerstoffhaltige Verbindungen bereitzustellen, die bei der Anwendung Peressigsäure mit ihrer hohen Oxidations-, Bleich- und Desinfektionswirkung freisetzen und die sich somit als wirksame Aktivsauerstoffkomponente in Wasch-, Bleich-, Reinigungs- und Desinfektionsmitteln bzw. als wirksame Oxidationsmittel einsetzen lassen. Die Verbindungen sollten sich ferner in einfacher Weise herstellen lassen.

Zur Lösung dieser Aufgabe schlägt die Erfindung neue feste Acetylperoxyborat-Verbindungen, d.h. Aktivsauerstoff-haltige Verbindungen auf Basis von Essigsäure und Borsauerstoffverbindungen, vor, die sich durch einen Aktivsauerstoff-Gehalt von 2 bis 8 Gew.-% und durch einen beim Lösen der Acetylperoxyborat-Verbindung in Wasser freisetzbaren Gehalt an Peressigsäure von wenigstens 10, vorzugsweise von 10 bis 30 Gew.-%, und an Wasserstoffperoxid von unter 4 Gew.-% auszeichnen.

Die erfindungsgemäßen Acetylperoxyborat-Verbindungen sind farblose, feste Verbindungen und zeichnen sich durch eine außerordentlich günstige Aktivsauerstoffstabilität aus. Sie sind bei den üblichen Temperaturen während der Lagerung und Handhabung chemisch und physikalisch unkritisch, was insbesondere im Hinblick auf die Herstellung, Weiterverarbeitung und Anwendung ein erheblicher sicherheitstechnischer Vorteil ist. So besitzen die erfindungsgemäßen Verbindungen hohe Zersetzungstemperaturen und erweisen sich sowohl im Fallhammertest (> 5 mkg) als auch im Stahlhülsentest (< 1 mm/Koenen-Test) mechanisch bzw. thermisch unkritisch. Die erfindungsgemäßen Verbindungen sind folglich nicht schlagempfindlich bzw. nicht explosionsgefährlich. Damit ist es erstmals gelungen, die Peressigsäure in einer stabilen, festen Form zu binden, aus der sie bei der Anwendung in wäßrigem Medium in einfacher Weise freigesetzt werden kann.

Die erfindungsgemäßen festen Acetylperoxyborat-Verbindungen sind im Wasser gut löslich und setzen augenblicklich beim Auflösen in Wasser direkt Peressigsäure, aber nur wenig Wasserstoffperoxid frei. Der aus den Acetylperoxyborat-Verbindungen freisetzbare Wasserstoffperoxid-Gehalt beträgt somit gemäß der Erfindung weniger als 4 Gew.-%. Besonders vorteilhafte Acetylperoxyborat-Verbindungen der Erfindung zeichnen sich dadurch aus, daß der beim Lösen der Acetylperoxyborat-Verbindung in Wasser freisetzbare Gehalt an Wasserstoffperoxid unter 3 Gew.-%, vorzugsweise sogar unter 1,5 Gew.-%, beträgt. Der aus den Acetylperoxyborat-Verbindungen freisetzbare Peressigsäure-Gehalt beträgt gemäß der Erfindung demgegenüber wenigstens 10 Gew.-%, insbesondere 10 bis 30 Gew.-%. Bevorzugte Acetylperoxyborat-Verbindungen der Erfindung zeichnen sich dadurch aus, daß der beim Lösen der Acetylperoxyborat-Verbindung in Wasser freisetzbare Gehalt an Peressigsäure 20 bis 30 Gew.-% beträgt.

Für die erfindungsgemäßen Acetylperoxyborate kann zwar noch keine genaue Molekülstruktur festgelegt werden, dennoch lassen sich die erfindungsgemäßen Verbindungen aufgrund ihrer chemischen Herkunft bzw. Herstellung sowie aufgrund ihrer Eigenschaften als Aktivsauerstoff-haltige Verbindungen auf Basis von Essigsäure und BorsauerstoffVerbindungen definieren. Die "Acetylperoxyborate" enthalten daher Strukturelemente, die sich aus den bei der Herstellung eingesetzten Edukten ableiten, nämlich Acetylgruppen, Aktivsauerstoff und Boratstrukturen 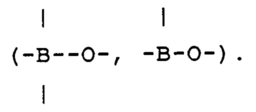
Die Acetylgruppen entstammen dabei aus der zugrundeliegenden Essigsäure und/oder Peressigsäure; der Aktivsauerstoff entstammt aus dem zugrundeliegenden Aktivsauerstoffträger, z.B. H₂O₂, Perborat, Peressigsäure; die in den erfindungsgemäßen Verbindungen vorliegenden Boratstrukturen entstehen während der Bildung der erfindungsgemäßen Verbindungen zwar aus den zugrunde liegenden Borsauerstoff-Verbindungen, können aber während der Bildung der erfindungsgemäßen Verbindungen einer Umwandlung unterliegen, so daß sie in Ihrer Struktur und Anordnung nicht mit denjenigen in den zugrundeliegenden Borsauerstoff-Verbindungen übereinstimmen müssen. Aufgrund des beim Lösen der festen Verbindung in Wasser daraus freisetzbaren Gehaltes an Peressigsäure, die in den Verbindungen vermutlich zumindest teilweise bereits strukturell vorgebildet ist, können die erfindungsgemäßen Verbindungen auch als ein festes Peressigsäurederivat (Peressigsäureabspalter) bezeichnet bzw. als eine "feste Peressigsäure" aufgefaßt werden.

Die erfindungsgemäßen Acetylperoxyborat-Verbindungen unterscheiden sich in ihrem makroskopischen Erscheinungsbild, in ihren chemischen wie auch physikalischen Eigenschaften, deutlich von den Ausgangsverbindungen. Hinsichtlich der physikalischen Eigenschaften der erfindungsgemäßen Acetylperoxyborat-Verbindungen ist einerseits hervorzuheben, daß sie im IR-Spektrum charakteristische IR-Banden im Bereich von etwa 1650 bis 1670 cm⁻¹ und im Bereich von etwa 1740 bis 1755 cm⁻¹ aufweisen (gemessen in Kaliumbromid bzw. Kaliumchlorid). Aktivsauerstoff-freie Umsetzungsprodukte aus Borsauestoff-Verbindung (Aktivsauerstoff-frei, z.B. Borax) mit Essigsäure weisen demgegenüber in diesen Bereichen keine IR-Banden auf, sondern lediglich IR-Banden bei etwa 1580 cm⁻¹. Ferner weisen sie im NMR-Spektrum (¹³C-CP/MAS-NMR, Festkörperspektroskopie; CP = cross polarisation, MAS = magic angle spinning) eine charakteristische ¹³C-NMR-Bande im Bereich von 18 bis 19 ppm, vorzugsweise bei etwa 18,5 ppm auf (gemessen gegen Tetramethylsilan (TMS) als externen Standard). In der Differenzkalorimetrie (DSC-Methode = Differential Scanning Calorimetrie) zeigen die erfindungsgemäßen Verbindungen einen charakteristischen Verlauf des Differenzkalorimetriediagrammes, wobei der Verlauf endotherm bei etwa 135 bis 140 °C beginnt und in einen exothermen Verlauf mit exothermem Peak-Maximum im Bereich von etwa 170 bis 185 °C übergeht. Wie sich aus dieser hohen Zersetzungstemperatur ablesen läßt, sind die erfindungsgemäßen Verbindungen wenig temperaturempfindlich und zeichnen sich somit durch eine gute thermische Stabilität aus. Deren thermische Stabilität übertrifft hierbei die Stabilität an sich bekannter Persalze wie z.B. Natriumpercarbonat, Natriumperborat-Monohydrat oder Natriumperborat-Tetrahydrat, deren exothermer Zersetzungspeak im Differenzkalorimetriediagramm bereits bei Temperaturen von 140 bis 160 °C liegt, und auch die Stabilität an sich bekannter Peroxycarbonsäuren wie z.B. DPDDA, deren exothermer Zersetzungspeak im Differenzkalorimetriediagramm bereits bei Temperaturen von etwa 130 °C liegt.

Mit den erfindungsgemäßen festen Acetylperoxyborat-Verbindungen wird erstmals eine bei gewöhnlichen Umgebungstemperaturen feste Applikationsform für die Peressigsäure mit einer guten Stabilität und einer günstigen Form für die Anwendung zur Verfügung gestellt. Diese feste Applikationsform von Peressigsäure kann vorteilhaft in Wasch-, Reinigungs-, Bleich- und Desinfektionsmittelzusammensetzungen und als Oxidationsmittel in der organischen Synthese Anwendung finden. Die Erfindung betrifft daher auch Wasch-, Reinigungs-, Bleich- und Desinfektionsmittelzusammensetzungen sowie Oxidationsmittel für die organische Synthese, die eine der erfingungsgemäßen Acetylperoxyborat-Verbindungen enthalten. Als Peressigsäureabspalter lassen sich die erfindungsgemäßen Acetylperoxyborat-Verbindungen besonders günstig in festen Bleich- und Desinfektionsmittelzusammensetzungen verwenden. Die Erfindung betrifft daher in einer bevorzugten Ausgestaltung feste Bleich- und Desinfektionsmittelzusammensetzungen, die eine der erfindungsgemäßen Peroxyborat-Verbindungen enthalten; besonders bevorzugt sind hierbei solche Zusammensetzungen, die die erfindungsgemäßen Acetylperoxyborat-Verbindungen in Form von Pulvern oder Granulaten in einem Sachet oder in Form einer in einer Folie eingeschweißten Tablette enthalten. Die erfindungsgemäßen Acetylperoxyborat-Verbindungen lassen sich beispielsweise vorteilhaft für die Trockenbleiche ("dry bleach") sowie als festes, gut dosierbares und leicht bei einer Anwendung in wäßriger Lösung auf die gewünschte Konzentration einstellbares Desinfektionsmittel einsetzen.

Wenn die erfindungsgemäßen Acetylperoxyborat-Verbindungen zur Anwendung als Desinfektionsmittel in Form eines in einem Sachet vorliegenden Pulvers, Granulates etc. oder in Form einer in einer Folie eingeschweißten Tablette vorliegen, so ist dieses besonders vorteilhaft, da der Einsatz der Peressigsäure als Desinfektionsmittel, bei dem wäßrige Lösungen mit bestimmtem Gehalt an Peressigsäure von der anwendenden Person herzustellen sind, wesentlich erleichtert wird. Bisher mußte z.B. bei der Zubereitung solcher wäßrigen Peressigsäure-Desinfektionslösungen eine konzentrierte, stark ätzende und einen stechenden Geruch aufweisende Peressigsäure/Essigsäure-Lösung bei der Dosierung abgemessen und auf die einzustellende Konzentration mit Wasser verdünnt werden, was besondere Sicherheitsvorkehrungen und besonders geschultes Personal erforderte. Mit den erfindungsgemäßen Verbindungen im Sachet bzw. als in Folie eingeschweißte Tablette gestaltet sich die Zubereitung von wäßrigen Desinfektionsmittellösungen bzw. das dafür notwendige Dosieren des Desinfektionsmittels in einfacher Weise derart, daß der Inhalt eines Sachets oder die Tablette lediglich in eine vorbestimmte Menge Wasser eingebracht werden muß. Die Zubereitung und Anwendung solcher Desinfektionsmittellösungen ist somit für die ausführende Person einfach, bequem und darüber hinaus unter Sicherheitsaspekten weitgehend unbedenklich.

Die Erfindung betrifft auch ein Verfahren zur Herstellung der erfindungsgemäßen Acetylperoxyborat-Verbindungen, welches sich dadurch auszeichnet, daß man
a) eine feste Borsauerstoff-Verbindung mit Essigsäure und Wasserstoffperoxid, und/oder
b) eine feste Borsauerstoff-Verbindung mit einer Lösung von Peressigsäure in Essigsäure und/oder
c) eine feste Persauerstoff-haltige Borsauerstoff-Verbindung mit Essigsäure,
ggf. unter Zusatz von Acetanhydrid und in den Verfahrensvarianten a) und b) ggf. unter Zusatz von alkalischem Natriumsalz, zu einer viskosen Lösung, Suspension oder Paste umsetzt und die gebildete Acetylperoxyborat-Verbindung durch an sich bekannte Trocknungsverfahren gewinnt.

Die erfindungsgemäßen Acetylperoxyborat-Verbindungen können nach den vorstehend angegebenen drei Verfahrensvarianten a) bis c) in einfacher Weise durch Mischen und Umsetzung oder jeweiligen Reaktionspartner und der fakultativen Zusätze unter Verwendung an sich bekannter und üblicher Apparaturen (z.B. Mischer, Trockner etc.) hergestellt werden. Zweckmäßigerweise wird die Umsetzung in diesen Verfahrensvarianten bei Temperaturen bis 60 °C, vorzugsweise bei Temperaturen von 30 bis 45 °C, durchgeführt.

Die Mengen der eingesetzten Reaktanden sind zweckmäßigerweise so aufeinander abgestimmt, daß in Verfahrensvariante
a) das Molverhältnis von Bor zu Acetylgruppen und zu Wasserstoffperoxid 1:(1 bis 5):(0,2 bis 2) beträgt, daß in Verfahrensvariante
b) das Molverhältnis von Bor zu Peressigsäure 1:(0,2 bis 2), vorzugsweise 1:(0,5 bis 1), beträgt und daß in Verfahrensvariante
c) das Molverhältnis von Persauerstoff-haltiger Borsauerstoff-Verbindung zu Acetylgruppen 1:(1 bis 10), vorzugsweise 1:(2 bis 6), beträgt.

Als Edukte können in den Verfahrensvarianten a) und b) an sich bekannte, feste Borsauerstoff-Verbindungen eingesetzt werden. Beispiele sind hierfür insbesondere Borsäure, Boroxid (B₂O₃) oder Polyborate wie z.B. Borax (Na₂B₄O₇ mit bis zu 10 Hydratwassern), Natriummetaborat und Natriummetaborat-Hydrat. Vorteilhaft sind hydratwasserarme bzw. hydratwasserfreie Borsauerstoff-Verbindungen, beispielsweise Boroxid und hydratwasserarme bzw. hydratwasserfreie Polyborate wie Borax mit bis zu etwa 3 Hydratwassern (z.B. Boraxdihydrat oder Boraxtrihydrat) oder Boraxanhydrid (Na₂B₄O₇). Sehr bevorzugt sind das hervorragend reagierende Boroxid (z.B. unter Zusatz von Natriumacetat als alkalisches Natriumsalz) sowie aus wirtschaftlichen Gründen das sogenannte Borax B (Na₂B₄O₇ mit etwa 2 bis 3 Hydratwassern) bzw. auch das sogenannte Borax C (Na₂B₄O₇ mit etwa 0 bis 1 Hydratwasser). Die Borax-Typen B und C können hierbei aus dem sogenannten Borax A (Boraxdekahydrat der Formel Na₂B₄O₇.10H₂O) durch an sich bekannte Entwässerungsverfahren hergestellt werden. Borax B wird beispielsweise durch 2-stündiges Trocknen bei 150 °C aus Borax A im Umluftofen erhalten. Um Borax C zu erhalten wird das erhaltene Borax B zusätzlich 1 Stunde bei 400 °C getrocknet. In Variante a) entsteht hierbei das erfindungsgemäße Acetylperoxyborat-Produkt direkt aus einfachen Edukten, d.h. aus Borsauerstoff-Verbindung, Essigsäure und Wasserstoffperoxid sowie gegebenenfalls Acetanhydrid und gegebenenfalls alkalischem Natriumsalz über intermediär gebildete persauerstoffhaltige Borsauerstoff-Verbindungen (Perborate) und/oder intermediär gebildete Peressigsäure. In Verfahrensvariante b) wird zur Bildung des erfindungsgemäßen Acetylperoxyborat-Produktes die eingesetzte Borsauerstoff-Verbindung dagegen mit einer bereits vorgebildeten Peressigsäure (als Peressigsäurelösung in Essigsäure) umgesetzt, wobei insbesondere kristalline Modifikationen der eingesetzten Borsauerstoff-Verbindungen sehr vorteilhaft sind.

Als Edukte in für die Verfahrensvariante c) können an sich bekannte, feste persauerstoffhaltige BorsauerstoffVerbindungen (z.B. Perborate oder Peroxoborate, superoxidierte Perborate) eingesetzt werden. Vorteilhaft werden insbesondere hydratwasserarme bzw. hydratwasserfreie Perborate mit einem Na:B-Mol-Verhältnis von 0,3:1 bis 1:1 eingesetzt. Sehr bevorzugt eingesetzte Perborate sind Natriumperborat-Monohydrat und Natriumperborate mit einem Na:B-Mol-Verhältnis von 0,4:1 bis 0,7:1. Werden die Perborate mit einem nicht klassischen Na:B-Molverhältnis von 0,45:1 bis 0,65:1 eingesetzt, ergeben sich günstige Acetylperoxyborat-Produkte mit hohen Gehalten an freisetzbarer Peressigsäure.

Die Durchführung der Umsetzung zur Herstellung der erfindungsgemäßen Acetylperoxyborat-Verbindungen gestaltet sich in recht einfacher Weise, indem man die Ausgangsverbindungen miteinander vermischt und reagieren läßt. Gewünschtenfalls wird hierbei auch Acetanhydrid zugesetzt, insbesondere zum Abfangen von Wasser; oder es wird gewünschtenfalls ein alkalisches Natriumsalz zugesetzt, um ein gewünschtes Na:B-Molverhältnis einzustellen. Wird als Borsauerstoffverbindung lediglich Boroxid und/oder Borsäure eingesetzt, so wird zur Einstellung des gewünschten Na:B-Molverhältnisses in jedem Fall ein alkalisches Natriumsalz zugesetzt. Geeignete alkalische Natriumsalze sind Natriumhydroxid, Natriumcarbonat, Natriumacetat, Natriumphosphate bzw. auch andere alkalische Natriumsalze; sehr zweckmäßig ist insbesondere Natriumcarbonat oder Natriumacetat. Während der Reaktion bildet sich eine viskose Lösung, Suspension oder Paste, die unter Erwärmung oder gegebenenfalls unter Selbsterwärmung gerührt oder geknetet wird. Die für die Umsetzung zweckmäßige oder benötigte Zeit kann je nach Verfahrensvariante variieren. In Verfahrensvariante c) kann die Umsetzungsdauer bis 100 Stunden, vorzugsweise aber 5 bis 30 Stunden, betragen. In Verfahrensvariante a) kann die Umsetzungsdauer bis 50 Stunden, vorzugsweise jedoch 2 bis 20 Stunden, betragen. Bei der Verfahrensvariante b) kann die Umsetzungsdauer von sehr kurzen Zeiten bis hin zu 10 Stunden, vorzugsweise jedoch von sehr kurzen Umsetzungszeiten bis 5 Stunden, betragen; im günstigsten Fall kann das Reaktionsgemisch direkt nach dem Mischen der Edukte zur Entfernung eines Überschusses an insbesondere Acetanhydrid und/oder Eisessig, zur Gewinnung der Acetylperoxyborat-Verbindung getrocknet werden.

Für die Umsetzungen in den Varianten a) bis c) erweist es sich insbesondere im Hinblick auf hohe Gehalte an freisetzbarer Peressigsäure und die Produktstabilität ferner als günstig, wenn möglichst wenig Wasser bei dem Umsetzungen zugegeben ist. Es sollte daher bei der Auswahl der Edukte darauf geachtet werden, daß mit diesen möglichst wenig Wasser in die Umsetzung eingebracht wird. Für die Umsetzungen sind daher nicht nur, wie oben bereits erwähnt, hydratwasserarme oder hydratwasserfreie sauerstoff- oder persauerstoffhaltige Borsauerstoff-Verbindungen bevorzugt, sondern auch die anderen Edukt-Komponenten wie insbesondere Essigsäure, Wasserstoffperoxid (z.B. >50 Gew.-% H₂O₂-Gehalt) und die verwendeten Peressigsäurelösungen in Essigsäure in wasserarmen Formen. In besonders bevorzugten Ausführungen der Verfahrensvariante a) wird daher insbesondere eine Wasserstoffperoxid-Lösung mit einem H₂O₂-Gehalt von wenigstens 70 Gew.-% eingesetzt. Auch in Verfahrensvariante b) wird insbesondere eine Lösung von Peressigsäure in Essigsäure eingesetzt, die möglichst wenig Wasser enthält; bevorzugt sind daher insbesondere solche Peressigsäure-Lösungen, die aus Essigsäure und/oder Acetanhydrid und Wasserstoffperoxid von wenigstens 50 Gew.-%, insbesondere jedoch von wenigstens 70 Gew.-%, H₂O₂-Gehalt hergestellt werden. In der sehr zweckmäßigen Verfahrensvariante b) empfielt es sich daher insbesondere präformierte Peressigsäure-Lösungen mit besonders niedrigem Wassergehalt einzusetzen, z.B. Peressigsäurelösungen mit einer ungefähren Zusammensetzung von etwa 21,5 Gew.-% Peressigsäure, 0,5 Gew.-% Wasserstoffperoxid, 71,5 Gew.-% Essigsäure und maximal etwa 6,5 Gew.-% Wasser. Der Wassergehalt kann gegebenenfalls noch durch weiteren Zusatz von Acetanhydrid gesenkt werden.

In zweckmäßigen Ausgestaltungen der Erfindung werden bei der Herstellung der erfindungsgemäßen Acetylperborat-Verbindungen an sich übliche Stabilisatoren für Perverbindungen zugesetzt oder diese sind bereits in den verwendeten Edukten enthalten. Die Stabilisatoren können auch nach erfolgter Umsetzung vor dem Trocknungsschritt eingesetzt werden. Als Stabilisatoren eignen sich beispielsweise Phosphate wie Metaphosphat, organische Stabilisatoren wie Chinolinsäure, Salicylsäure oder Dipicolinsäure (DPA), Chelatbildner wie 8-Oxychinolin oder Ethylendiamintetraessigsäure (EDTA), Phosphonsäurederivate wie z.B. Methylen- bzw. Aminomethylenphosphonsäuren oder deren Salze, sowie auch geringe Mengen üblicher Netzmittel. Besonders geeignete Stabilisatoren, insbesondere auch im Hinblick auf die Langzeitstabilität der erfindungsgemäßen Produkte, sind z.B. 1-Hydroxyethan-1,1-diphosphonsäure, Ethylendiamintetramethylenphosphonsäure, Diethylentriaminpentamethylenphosphonsäure und deren Salze. Solche Stabilisatoren können in üblichen Konzentrationen von 0,1 bis 10 g/kg in die erfindungsgemäßen Produkte eingearbeitet werden. Werden die Stabilisatoren bereits bei der Herstellung der erfindungsgemäßen Acetylperoxyborat-Verbindungen eingebracht, so kann dieses bevorzugt über die eingesetzte Wasserstoffperoxidlösung oder die eingesetzte Peressigsäurelösung geschehen. Insbesondere werden die Stabilisatoren dabei in solchen Mengen eingesetzt, wie sie später auch in den Produkten vorliegen sollen.

Die Umsetzung der Edukte zu den erfindungsgemäßen Acetylperoxyborat-Verbindungen kann in an sich bekannten Apparaten durchgeführt werden. Beispielsweise kann die Umsetzung unter Rühren in Glas-, Email- oder PolyethylenRührkesseln erfolgen. Man erhält anfangs leicht flüssige Lösungen oder Suspensionen die allmählich viskoser bzw. pastöser werden und in diesem noch pumpfähigen Zustand in eine Trocknungsapparatur überführt werden können, um Wasser und überschüssige Essigsäure zu entfernen. Die Umsetzung läßt sich sehr günstig auch in schnellaufenden Vakuum-Intensivmischern durchführen, in denen dann auch die nachfolgende Trocknung erfolgen kann. Man erhält so bereits rundkörnige Granulate mit 1 bis 3 mm Korngröße, wobei der gegebenenfalls gebildete Feinanteil durch anschließende Siebung entfernt und gegebenenfalls weiteren Granulationsmaßnahmen zugeführt werden kann. Es können auch vorteilhaft Turbulenzmischer (Mischmühle mit regulierbarer Korngröße) eingesetzt werden, die eine bessere Regulierung der Korngröße des Produktes zulassen.

In einer weiteren, sehr vorteilhaften Ausgestaltung des Verfahrens zur Herstellung der erfindungsgemäßen Acetylperoxyborat-Verbindungen zeichnet sich dieses dadurch aus, daß man vor der abschließenden Trocknung die pastösen oder durch Zwischentrocknung erhaltenen Acetylperoxyborat-Verbindungen mit einem inerten Lösungsmittel wäscht. Hierfür bevorzugte Lösungsmittel sind insbesondere niedere Alkohole, wie z.B. C1- bis C3-Alkohole (Methanol, Ethanol, Propanol, Isopropanol) oder Ester dieser Alkohole mit Essigsäure. Aus der Gruppe der niederen Alkohole ist insbesondere Ethanol und aus der Gruppe der Ester insbesondere Essigsäureethylester bevorzugt. Durch die vorstehende Maßnahme werden besonders günstige Produkte erhalten. Es können auch technische Lösungsmittel, die nicht völlig wasserfrei zu sein brauchen, zum Waschen eingesetzt werden.

Im Anschluß an die Umsetzung, bzw. gegebenenfalls nach Zwischentrocknung und Waschen, wird aus dem im allgemeinen in Form einer viskosen Lösung, Suspension oder Paste vorliegenden Reaktionsgemisch vorhandenes Wasser sowie der Überschuß an eingesetzter Essigsäure bzw. gegebenenfalls Reste des zum Waschen verwendeten inerten Lösungsmittels in an sich bekannter geeigneter Weise - z.B. durch Umlufttrocknung, Vakuumtrocknung, Walzentrocknung, Sprühtrocknung oder Fließbetttrocknung etc. - entfernt.

Die Trocknung wird hierbei unter für persauerstoffhaltige Verbindungen geeigneten, dem Fachmann an sich bekannten Bedingungen durchgeführt, wobei sich die einzuhaltenden Bedingungen, insbesondere die Trockentemperaturen nach dem jeweiligen Trockenverfahren und der jeweiligen Verweildauer des Produktes richten.

So bieten die Sprühtrocknungsverfahren eine schonende, schnelle Methode zur Produktgewinnung, die sich zweckmäßigerweise auch für die Gewinnung größerer Produktmengen eignet. Zur Sprühtrocknung können die bei der Umsetzung erhaltenen viskosen Lösungen oder Suspensionen entweder direkt bzw. die bei der Umsetzung erhaltenen Pasten gegebenenfalls nach Überführung in eine sprühfähige Suspension sprühgetrocknet werden. Die Überführung von Pasten in sprühfähige Suspensionen erfolgt durch Zusatz von inerten Lösunsmitteln wie man sie auch zum oben beschriebenen Waschvorgang verwendet, beispielsweise durch Zusatz von Essigsäureethylester. Es kann an sich jedes Sprühtrocknungsverfahren eingesetzt werden; beispielsweise können gewöhnliche Sprühtrockner ("SD") oder spezielle Trockner wie Spin-Flash-Trockner, die sich auch für die Trocknung von Pasten ohne Überführung in eine Suspension eignen, sowie auch Fließbettsprühtrockner ("FSD") bzw. Fließbettsprühgranulatoren ("FSG") verwendet werden, wobei die beiden letzteren neben der Trocknung des Produktes gewünschtenfalls im Zusammenhang mit dem Trocknungsschritt auch eine damit verbundene Granulation des Produktes erlauben. Die Trockentemperaturen (Ablufttemperaturen) richten sich je nach der Verweilzeit des Produktes und betragen bei kurzen Verweilzeiten im Sprühtrockner in etwa 80 bis 130 °C, vorzugsweise 95 bis 115 °C; bei längeren Verweilzeiten, z.B. im Fließbettsprühgranulator (FSG) betragen die Trockentemperaturen 50 bis 90 °C.

Die erfindungsgemäßen Acetylperoxyborate können auch in anderer Weise im Luftstrom getrocknet werden, beispielsweise in Fließbett- oder in Umlufttrocknern. Die Trocknungstemperaturen betragen hierbei im allgemeinen 30 bis 80 °C und liegen bevorzugt bei Temperaturen von 40 bis 60 °C. Eine weitere Möglichkeit besteht in der Vakuumtrocknung, die insbesondere zu sehr hohen Ausbeuten im Hinblick auf den Gehalt an freisetzbarer Peressigsäure im Produkt führt. Die Trockentemperaturen bei der Vakuumtrocknung liegen bei 30 bis 80 °C, vorzugsweise bei 40 bis 60 °C, im Wasserstrahlvakuum bzw. bei Drucken von etwa 15 bis 100 mbar.

Es ist auch möglich verschiedene Trockenverfahren miteinander zu kombinieren, was insbesondere zweckmäßig sein kann, wenn die Produkte für das Waschen mit inerten Lösungsmitteln zwischengetrocknet werden sollen. So kann man die Produkte beispielsweise durch Vakuumtrocknung zunächst bis zu einem gewünschen Grad vortrocknen, anschließend gegebenenfalls mit inertem Lösungsmittel waschen und abschließend im Luftstrom, beispielsweise in einem Fließbett- oder einem Umlufttrockner, wie angegeben das Produkt trocknen.

In speziellen Apparaturen ist es ferner möglich, sowohl die Umsetzung der Edukte, eine Granulation des entstehenden Produktes und die Abschluß- bzw. Zwischentrocknung als "Eintopfverfahren" in einem für die Granulation geeigneten Vakuummischer, beispielsweise in einem Vakuum-Intensivmischer, durchzuführen.

In einer sehr bevorzugten Ausgestaltung der obenbeschriebenen Verfahrensvariante b) zur Herstellung der erfindungsgemäßen Acetylperoxyborate wird die Umsetzung der Borsauerstoff-Verbindung mit einer präformierten Peressigsäure-Lösung in speziell ausgestatteten Mischern derart geführt, daß bereits innerhalb kurzer Reaktions- und Kristallisationszeiten ein Granulat der Acetylperoxyborate erhalten wird. Dieses Verfahren zur Herstellung von festen Acetylperoxyborat-Verbindungen zeichnet sich dadurch aus, daß man gemäß Verfahrensvariante b) in einem Mischer, der mit rotierendem Mischwerkzeug und zerkleinerndem Mischhilfswerkzeug, mit Wärmeaustauscheinrichtung zum Kühlen und Heizen sowie mit Vakuumeinrichtung ausgerüstet ist, wobei wenigstens das zerkleinernde Mischhilfswerkzeug durch eine Froudezahl Fr > 1, vorzugsweise Fr >> 1, charakterisiert ist,
b1) eine präformierte Lösung von Peressigsäure in Essigsäure und eine wasserarme Borsauerstoffverbindung so miteinander umsetzt, daß die Temperatur etwa 40 °C nicht übersteigt,
b2) Impfkristalle aus Acetylperoxyborat zusetzt und
b3) unter Mischen bei Temperaturen bis etwa 45 °C eine Paste des Acetylperoxyborates bildet,
b4) der Paste ggf. ein Gleitmittel zusetzt und die Paste im Vakuum bei einer Produkttemperatur bis etwa 60 °C, vorzugsweise von 35 bis 55 °C, bis zur Bildung eines körnigen Acetylperoxyborates vortrocknet, wobei man im Verlaufe dieser Vortrocknung nach Überschreiten einer Umbruchphase beim beginnenden Zerfall der weitgehend vorgetrockneten Paste des Acetylperoxyborates für einen kurzen Zeitraum das zerkleinernde Mischhilfswerkzeug zuschaltet, und anschließend in Stufe b5) entweder
b5.1) das vorgetrocknete Acetylperoxyborat bei Normaldruck und einer Produkttemperatur bis etwa 80 °C, vorzugsweise bis etwa 60 °C, vollständig nachtrocknet und danach durch Sieben die gewünschte Kornfraktion des Acetylperoxyborates abtrennt oder
b5.2) zunächst durch Sieben des vorgetrockneten Acetylperoxyborates die gewünschte Kornfraktion des Acetylperoxyborates von den Grob- und/oder Feinanteilen abtrennt und danach nur die Fraktion mit gewünschter Korngröße bei Normaldruck und einer Produkttemperatur bis etwa 80 °C, vorzugsweise bis etwa 60 °C, vollständig nachtrocknet,
wodurch man das Acetylperoxyborat in der Form eines festen, körnigen und rieselfähigen Granulates gewinnt.

Bei der vorstehenden Ausgestaltung der Verfahrensvariante b) wird die Umsetzung von Borsauerstoff-Verbindung mit Peressigsäure in speziell ausgestatteten Vakuummischern, z.B. Vakuumturbulenzmischern bzw. Vakuumintensivmischern ausgeführt, die wenigstens ein schnellrotierendes Misch- oder Zerkleinerungswerkzeug aufweisen, das durch Froudezahlen > 1, vorzugsweise sogar durch Froudezahlen sehr viel größer als 1 gekennzeichnet ist, wobei eine große Froudezahl insbesondere nach der unten beschriebenen Umbruchphase für die Granulatbildung von Bedeutung ist. Die Froudezahl ist hierbei ein Kriterium für die Gutbewegung in einem Zwangsmischer und beschreibt als Ordnungskenngröße das Wechselspiel von Trägheitskräften und Schwerkräften. Die Froudezahl Fr wird daher für die Charakterisierung von Mischvorgängen bzw. für die Einteilung von Mischertypen herangezogen; sie wird definiert als Fr = Rw ²/g, wobei gilt: R = Außenradius des Mischelementes, w = Winkelgeschwindigkeit, g = Erdbeschleunigung. Die eingesetzten Mischertypen müssen zur Temperatursteuerung während der Umsetzung und Trocknung eine Wärmeaustauscheinrichtung besitzen, die sowohl das Kühlen als auch das Erwärmen erlaubt. Beispielsweise können die Mischer mit einem zum Kühlen und Erwärmen geeigneten Doppelmantel ausgerüstet sein. Außer dem rotierenden Werkzeug, welches nach Art der Pflugscharmischer oder Flügelmischer ausgebildet sein kann, besitzen die hier verwendeten Mischer zusätzlich schnellrotierende Mischhilfen zur Zerkleinerung, die beispielsweise nach Art der Stiftmühlen ausgebildet sind. Die eingesetzten Mischertypen sind somit gleichermaßen zum Mischen, Zerkleinern und zum Runden sowie zur Vakuumtrocknung des Produktes geeignet. Daher können Reaktion, Kristallisation, Trocknung und Granulierung in einer einzigen Apparatur durchgeführt werden (Eintopfverfahren).

Bei der Umsetzung gemäß der vorstehenden Ausgestaltung der Verfahrensvariante b) wird die Peressigsäure-Lösung im Mischer mit einer festen Borsauerstoff-Verbindung in Form eines Pulvers oder Granulates umgesetzt. Sowohl die Peressigsäure als auch die Borsauerstoff-Verbindung werden hierbei in einer wasserverminderten Form eingesetzt, wobei der mit den Edukten in die präformierte Peressigsäure-Lösung eingebrachte Wassergehalt leicht durch Zusatz von Acetanhydrid während der Peressigsäure-Herstellung gesenkt werden kann. Hierzu wird Acetanhydrid in bis zu etwa äquimolarer Menge zum Wassergehalt der Edukte, die für die Herstellung der Peressigsäure dienen, zugesetzt. Ebenso wie die präformierte Peressigsäure-Lösung sollte auch die verwendete Borsauerstoff-Verbindung in einer wasserverminderten Form in das Reaktionsgemisch eingebracht werden. Bevorzugt sind daher wasserarme Borax-Hydrate, insbesondere solche Borax-Hydrate die z.B. der Formel Na₂B₄O₇·(H₂O)₀₋₃ genügen und einen Borgehalt von etwa 17 bis 21 Gew.-% aufweisen; dieses entspricht einem formalen Hydratwassergehalt von 0 bis 3 Mol, wobei das Wasser bei Gehalten kleiner 2 Mol als Strukturwasser in Na₂B₄0₅ (OH)₄ gebunden ist. Borax-Hydrdate mit einem formalen Hydratwassergehalt von etwa 1 bis 2 Mol sind besonders bevorzugt.

Für die Bildung des erfindungsgemäßen Acetylperoxyborates im Vakuummischer gemäß der obigen Verfahrensvariante ist es entscheidend, daß dem Reaktionsgemisch aus Peressigsäure-Lösung und Borsauerstoff-Verbindung in Stufe b2) Impfkristalle aus Acetylperoxyborat zugesetzt werden. Hierdurch wird die Reaktionszeit und die Kristallisationszeit vorteilhaft verkürzt. Die Zugabe der Impfkristalle aus Acetylperoxyborat gemäß Stufe b2) kann daher bereits während der Umsetzung der Borsauerstoff-Verbindung mit der Peressigsäure-Lösung gemäß Stufe b1) oder erst im Anschluß an diese Umsetzung erfolgen. Als Impfkristalle für b2) kann an sich jedes Acetylperoxyborat verwendet werden; z.B. Grob- und/oder Feinanteile (Ober- und/oder Unterkorn) von Acetylperoxyborat, die in nachgeschalteten Verfahrensstufen durch Sieben von der gewünschten Kornfraktion des Acetylperoxyborates abgetrennt werden. Durch die uneingeschränkte Rückführung von Kornfraktionen des Acetylperoxyborates mit Ober- und/oder Unterkorn kann eine vorteilhafte und vollständige Verwertung der eingesetzten Rohstoffe sichergestellt werden. Die zugesetzte Menge an Impfkristallen richtet sich nach dem Anfall an Unter- bzw. Oberkorn aus der Siebung und ist nach oben nicht kritisch. Deutliche Auswirkungen auf die Reaktions- und Kristallisationszeit ergeben sich durch Zusatz in einer Menge ab wenigstens etwa 2 Gew.-% bezogen auf das Reaktionsgemisch in Stufe b1). Bei geringerem Zusatz als 2 Gew.-% muß eine längere Reaktions- und Kristallisationszeit in Kauf genommen werden.

Nach der vorstehenden Umsetzung und Zugabe von Impfkristallen wird in Stufe b3) aus dem Reaktionsgemisch unter Mischen bei Temperaturen bis etwa 45 °C, vorzugsweise bei Temperaturen von etwa 35 bis 40 °C, durch fortschreitende Kristallisation eine Paste des Acetylperoxyborates gebildet. Aus dieser Paste wird in Stufe b4) durch schonende Vakuumtrocknung ggf. unter Zusatz von Gleitmittel der größte Teil des Lösungsmittels und sonstiger flüchtiger Bestandteile entfernt. Die Vakuumtrocknung wird beispielsweise bei einem Druck von etwa 10 bis 100 mbar ausgeführt. Hierbei wird die Produkttemperatur auf bis etwa 60 °C, vorzugsweise auf 35 bis 55 °C, eingestellt. Das Lösungsmittel (Essigsäure) kann dadurch unter sehr produktschonenden Bedingungen aus der Acetylperoxyborat-Paste entfernt und in die Herstellung präformierter Peressigsäure-Lösung zurückgeführt werden. Im Verlaufe der Vakuumtrocknung nimmt der Lösungsmittelgehalt ab, die Paste aus Acetylperoxyborat geht in einen plastischen Zustand, dessen Zähigkeit während der Vakuumtrocknung weiter zunimmt. Hierbei wird nach einiger Zeit eine für die Granulatbildung kritische Phase, die Umbruchphase, erreicht, wobei dann die Viskosität des Produktes nochmals beträchtlich ansteigt. Den Beginn dieser Umbruchphase kann man daran erkennen, daß z.B. die Stromaufnahme des Mischers deutlich ansteigt. Im Verlaufe dieser Umbruchphase geht das Acetylperoxyborat aus dem Zustand einer zähen, plastischen Masse in einen festen, vom Mischer aber noch knetbaren Produktzustand über. Zum Ende der Umbruchphase wird dieser feste, aber noch knetbare Zustand des Acetylperoxyborates vom Mischer unter Zerfall der knetbaren Paste und Bildung eines nunmehr krümeligen Acetylperoxyborat-Produktes durchbrochen, womit die Umbruchphase dann überschritten ist. Direkt nach Überschreiten der Umbruchphase, d.h. nach dem Durchbruch, muß das zerkleinernde Mischhilfswerkzeug, vorzugsweise eine Stiftmühle, für einen kurzen Zeitraum von einigen Minuten zugeschaltet werden. Dieser Zeitraum richtet sich nach dem Maß der gewünschten Zerkleinerung und kann insbesondere bis etwa 10 Minuten betragen. Die Einwirkung des zerkleinenden Mischhilfswerkzeuges ist für die Granulatbildung im Hinblick auf die Korngestalt und die Regulierung der Korngröße entscheidend. Durch den ggf. Gleitmittelzusatz wird hierbei der Energiebedarf während der Umbruchphase gesenkt und das Durchlaufen der Umbruchphase einschließlich Zerkleinerung erleichtert. Im vorliegenden Verfahren kann an sich jedes Gleitmittel eingesetzt werden, welches oxidationsstabil und mit den Edukten bzw. Produkten verträglich ist. Geeignet sind z.B. Fettsäuremetallsalze, insbesondere Alkali- und/oder Erdalkalimetallsalze von längerkettigen gesättigten Fettsäuren, welche vorzugsweise unverzweigt sind und bis zu 18 Kohlenstoffatomen, insbesondere 16 bis 18 Kohlenstoffatome enthalten können. Als besonders günstig erweisen sich Salze der Stearinsäure. Bevorzugt setzt man als vorstehende Fettsäuremetallsalze diejenigen der Alkali- und/ oder Erdalkalimetalle der zweiten und dritten Periode des Periodensystems der Elemente, insbesondere aber diejenigen von Natrium, Kalium oder Magnesium ein. Ganz besonders bevorzugt wird als Fettsäuremetallsalz Magnesiumstearat im vorliegenden erfindungsgemäßen Verfahren eingesetzt. Das Gleitmittel wird hierbei der in Stufe b3) erhaltenen Acetylperoxyborat-Paste zu Beginn der Vortrocknung in Stufe b4) in einer Menge von bis zu 5 Gew.-%, vorzugsweise in einer Menge von 0,2 bis 1 Gew.-%, zugesetzt; die Mengenangaben sind hierbei auf das Reaktionsgemisch in Stufe b1) bezogen.

Man erhält nach der Vakuumvortrocknung gemäß Stufe b4) ein festes körniges Acetylperoxyborat-Granulat, welches noch bis zu etwa 10 Gew.-% flüchtige Bestandteile, beispielsweise Essigsäure und/oder Wasser, enthalten kann. Zur vollständigen Entfernung dieser restlichen, flüchtigen Bestandteile muß das Granulat unter schärferen Trocknungsbedingungen in einer weiteren Trocknungsstufe nachgetrocknet werden, da eine weitergehende Trocknung unter Vakuumbedingungen sehr zeitaufwendig ist und nicht zum erforderlichen Trocknungsgrad führt. Durch die Nachtrocknung wird die Stabilität des Produktes deutlich positiv beeinflußt.

An die vorstehende, erste Stufe der Trocknung, die Vortrocknung im Vakuum gemäß Stufe b4), schließt sich daher in Stufe b5) die zweite Stufe der Trocknung, insbesondere z.B. eine Lufttrocknung an. Die Trocknung des Acetylperoxyborat-Produktes aus Stufe b4) wird hierbei unter Normaldruck und bei Produkttemperaturen bis 80 °C, insbesondere aber bis etwa 60 °C, bis zur vollständigen Entfernung der restlichen flüchtigen Bestandteile (z.B. Essigsäure, Wasser) aus dem Produkt durchgeführt. Die Nachtrocknung in Verfahrensstufe b5) kann hierbei in zwei Varianten ausgeführt werden. In einer ersten Variante b5.1) wird das Acetylperoxyborat-Produkt aus der Vakuumtrocknung in Stufe b4) zunächst z.B. durch Lufttrocknung vollständig nachgetrocknet und erst danach durch Sieben die gewünschte Kornfraktion des Acetylperoxyborates abgetrennt. In einer zweiten Variante b5.2) wird zunächst durch Sieben des in Stufe b4) vorgetrockneten Acetylperoxyborat-Produktes die gewünschte Kornfraktion des Acetylperoxyborat-Granulates abgetrennt und danach nur diese Fraktion mit gewünschter Korngröße z.B. durch Lufttrocknung vollständig nachgetrocknet. Die abgetrennten Fraktionen des Acetylperoxyborat-Granulates mit Ober- und/oder Unterkorn (Grob- bzw. Feinanteile) können anschließend in vorteilhafter Weise als Kristallisationskeime für Stufe b2) in das Herstellverfahren zurückgeführt werden. Die Lufttrocknung kann beispielsweise durch die im Stand der Technik an sich üblichen Verfahren, vorzugsweise durch Trocknung in einer Wirbelschicht durchgeführt werden. In Verfahrensvariante b5.1) kann die abschließende Trocknung gegebenenfalls auch bereits im Vakuummischer durchgeführt werden, sofern dieser zusätzlich mit Einrichtungen für die Zufuhr von Trockenluft und die Abfuhr der Abluft ausgerüstet ist.

Das erfindungsgemäße Verfahren zur Herstellung von Acetylperoxyboraten gemäß Verfahrensstufen b1) bis b5) weist besondere Vorteile auf. Insbesondere ermöglicht dieses Verfahren, die Reaktionszeit für die Bildung des Acetylperoxyborates gegenüber den anderen Verfahrensvarianten erheblich zu verkürzen. Die Zweistufentrocknung ermöglicht unter produktschonenden Bedingungen die vollständige Entfernung von flüchtigen Bestandteilen wie Essigsäure und Wasser aus dem Reaktionsprodukt. Hierbei wird zunächst unter den milden Bedingungen einer Vakuumtrocknung der Großteil der flüchtigen Bestandteile entfernt, während unter den schärferen Bedingungen der zweiten Trocknungsstufe nur noch ein geringer Anteil von bis zu etwa 10 Gew.-% an flüchtigen Bestandteilen vollständig entfernt wird. Hierdurch werden sehr stabile und lagerfähige Produkte erhalten. Ferner fällt das Produkt bereits in Granulatform an, wodurch sich weitere Aufbaugranulationen erübrigen. Das Produkt kann somit direkt, gegebenenfalls nach Beschichtung mit einem Überzug, der weiteren Verwendung zugeführt werden.

Durch die vorstehend beschriebenen Verfahren und Verfahrensvarianten lassen sich die erfindungsgemäßen Acetylperoxyborat-Verbindungen somit in vorteilhafter Weise herstellen. Die erfindungsgemäßen Verbindungen fallen bei diesen Herstellverfahren in der Regel als farbloses Pulver bzw. gegebenenfalls bereits als farbloses Granulat an und können mit an sich bekannten Maßnahmen für die jeweils beabsichtigte Anwendung weiterverarbeitet werden. Sie können z.B. in an sich bekannter Weise durch Granulations- oder Agglomerationsverfahren zu zweckmäßigen Anwendungsformen wie beispielsweise Strangschnittlingen, Pellets, Schülpen, Briketts, Tabletten oder Granulate gewünschter Kornfraktionen etc. weiterverarbeitet werden. Die durch Granulation oder Agglomeration erhaltenen Produkte aus Acetylperoxyborat-Verbindungen können gewünschtenfalls zusätzlich durch an sich bekannte Coating-Verfahren mit Überzügen beschichtet werden. Bei der Herstellung von Granulaten, Agglomeraten oder Tabletten können an sich hierfür übliche Hilfsstoffe wie Bindemittel, Gleitmittel, Sprengmittel, Stabilisatoren etc. verwendet werden. Ferner kann das erfindungsgemäße Produkt aus Acetylperoxyborat-Verbindung für bestimmte Anwendungen zum Schutz gegen Feuchtigkeit zusätzlich in eine Folie, z.B. gewöhnliche Haushalts-Polyethylenfolien, eingeschweißt werden; dieses ist insbesondere für Bleichanwendungen (z.B. "dry bleach, Fleckensalz) oder Desinfektionsmittelanwendungen vorteilhaft, da hierdurch die entsprechende Dosierung erleichtert werden kann.

Die erfindungsgemäßen Acetylperoxyborat-Verbindungen weisen eine Reihe von Vorteilen auf. So zeigen sie als Peressigsäureabspalter hervorragende Bleichleistungen auch gegenüber schwierigen Anschmutzungen wie Rotwein oder Tee, wobei die Bleichleistung nicht nur derjenigen von DPDDA-Systemen gleichkommt, sondern die Bleichleistung von konventionellen Perborat/TAED-Systemen deutlich übertrifft. Die hohe Bleichleistung wird auch in Flüssigwaschmitteln und auch im Vergleich zu an sich üblichen Fleckensalzen (Percarbonat/TAED-Systeme) erzielt. Ferner ist das bleichende Agens, die Peressigsäure, aus den erfindungsgemäßen Verbindungen schneller verfügbar als aus an sich üblichen Perborat/TAED-Bleichsystemen. Weiterhin bieten die erfindungsgemäßen Acetylperoxyborat-Verbindungen Vorteile bei der Anwendung als Desinfektionsmittel. Die erfindungsgemäßen Verbindungen entsprechen in ihrer Mikrobizidie der Peressigsäure sind aber aufgrund ihrer festen Form gegenüber der Peressigsäure vorteilhafter. So können die erfindungsgemäßen Verbindungen für diesen Anwendungszweck leicht portioniert werden, beispielsweise als Tablette bzw. portionierte Abpackung eines Granulates.

Granulate der erfindungsgemäßen AcetylperoxyboratVerbindungen bieten auch Vorteile beim Einsatz als portioniertes Fleckensalz bzw. Bleichmittel (z.B. in Folie eingeschweißt oder in tiefgezogenen, mit kaschierter Folie verschlossenen Portionsschalen), insbesondere beim gemeinsamen Einsatz mit Flüssigwaschmitteln. Beim Einsatz mit Flüssigwaschmitteln können diese Bleichmittel dann portionsweise dem Waschvorgang separat zum bleichmittelfreien Flüssigwaschmittel zugesetzt werden.

Die nachfolgenden Beispiele sollen die Erfindung weiter erläutern, ohne sie jedoch in ihrem Umfange zu beschränken. Die verwendeten Abkürzungen bedeuten: PES = Peressigsäure; IR = Infrarotspektroskopie; NMR = Kernresonanzspektroskopie; CP/MAS = cross polarisation/magic angle spinning; DSC = Differential Scanning Calorimetrie (Differenzkalorimetrie);
- Borax B:: Na₂B₄O₇·(H₂O)₂₋₃, erhalten aus Borax A = Na₂B₄O₇·10H₂O durch 2-stündiges Trocknen bei 150 °C im Umluftofen.
- Borax C:: Na₂B₄O·(H₂O)₀₋₁, erhalten aus Borax B durch zu sätzliches 1-stündiges Trocknen bei 400 °C.
PBS-1 = Natriumperborat-Monohydrat; Oa = Aktivsauerstoff; DPDDA = Diperoxydodecandisäure; TAED = Tetraacetylethylendiamin; PBS-4 = Natriumperborat-Tetrahydrat; PCS = Natriumpercarbonat; Oa = Aktivsauerstoff.

### Beispiel 1:

10 g Natriumperborat-Monohydrat (15 Gew.-% Aktivsauerstoff) wurden mit 30 g Essigsäure (96 gew.-%ig) innerhalb innerhalb 20 h bei 35 °C in einem Rührbehälter unter Rühren bis zur Konsistenz einer homogenen Paste umgesetzt und anschließend 2 h bei 40 °C im Vakuum einer Wasserstrahlpumpe getrocknet. (Molverhältnis der Reaktanden 1:5)

Als Trockengut erhielt man 15 g eines Acetylperoxyborates in Form eines weißen Pulvers mit folgender Zusammensetzung und folgenden Eigenschaften.
Aktivsauerstoff-Gehalt: 3,5 Gew.-%
In Wasser freisetzbarer Gehalt an PES : 16 Gew.-%
In Wasser freisetzbarer Gehalt an H₂O₂: 0,2 Gew.-%

### Beispiel 2:

40 g eines Natriumperoxoborates mit einem Molverhältnis von Natrium zu Bor zu Aktivsauerstoff von 0,6:1:1,1 wurden mit 120 g Essigsäure (96 gew.-%ig) unter Rühren innerhalb 20 h bei 30 °C zu einer Paste umgesetzt. Das Molverhältnis von Na:B:Oa:Essigsäure im Reaktionsgemisch betrug danach 0,6:1:1,1:4. Anschließend wurde bei 40 °C im Vakuum getrocknet.

Als Trockengut erhielt man 69 g eines Acetylperoxyborates mit folgender Zusammensetzung und folgenden Eigenschaften.
Aktivsauerstoff-Gehalt: 6,4 Gew.-%
In Wasser freisetzbarer Gehalt an PES : 25 Gew.-%
In Wasser freisetzbarer Gehalt an H₂O₂: 2,4 Gew.-%

- DSC:: endothermer Peak (Maximum) etwa bei 160 °C
exothermer Peak (Maximum) etwa bei 178 °C

### Beispiel 3:

30 g Borax C (20,6 Gew.-% Bor) wurde mit 137 g Essigsäure (99,8 gew.-%ig) und 23 g Wasserstoffperoxid (85 gew.-%ig) im Molverhältnis von Na:B:Oa:Essigsäure gleich 0,5:1:0,97:3,92 unter Rühren innerhalb von 15 h bei 30 °C zu einer Paste umgesetzt. Anschließend wurde bei 40 °C im Wasserstrahlvakuum getrocknet.

Als Trockengut erhielt man 73 g eines Acetylperoxyborates mit folgender Zusammensetzung und folgenden Eigenschaften.
Aktivsauerstoff-Gehalt: 6,1 Gew.-%
In Wasser freisetzbarer Gehalt an PES : 26,1 Gew.-%
In Wasser freisetzbarer Gehalt an H₂O₂: 1,2 Gew.-%
IR (KBr, cm⁻¹): 1748; 1660
¹³C-CP/MAS-NMR: 18,6 ppm

- DSC:: endothermer Peak (Maximum) etwa bei 150 °C
exothermer Peak (Maximum) etwa bei 180 °C
(zusätzlicher endothermer Peak etwa bei 215 °C)

### Beispiel 4:

a) Es wurde eine präformierte Peressigsäure hergestellt. Hierzu wurden 170 g Essigsäure (99,8 gew.-%ig) und 30 g 85 gew.-%iges Wasserstoffperoxid unter Zusatz von 1 g konz. Schwefelsäure 1,5 Stunden bei 35 °C gerührt. Man erhielt 200 g einer präformierten Peressigsäure-Lösung mit einem Peressigsäuregehalt von 24,5 Gew.-% und einem Restgehalt an freiem Wasserstoffperoxid von 1,4 Gew.-%.
b) 150 g der unter a) hergestellten Peressigsäure-Lösung wurden mit 24 g Borax C (20,9 Gew.-% Bor) entsprechend einem Molverhältnis Na:B:PES von 0,5:1:1 zu einer homogenen Suspension umgesetzt und anschließend bei 40 °C im Wasserstrahlvakuum getrocknet.

Als Trockengut erhielt man 55 g eines Acetylperoxyborates in Form eines Pulvers mit folgender Zusammensetzung und folgenden Eigenschaften.
Aktivsauerstoff-Gehalt: 6,6 Gew.-%
In Wasser freisetzbarer Gehalt an PES : 28 Gew.-%
In Wasser freisetzbarer Gehalt an H₂O₂: 1,6 Gew.-%

### Beispiel 5:

40 g einer wie in Beispiel 4 a) hergestellten Peressigsäure-Lösung wurden mit 20 g Borax C (20,9 Gew.-% Bor) entsprechend einem Molverhältnis Na:B:PES von 0,5:1:0,5 innerhalb von 3 h bei 35 °C zu einer Paste umgesetzt. Die erhaltene Paste wurde zweimal mit je 50 ml Ethanol auf einer Nutsche ausgewaschen. Anschließend wurde 2,5 h bei 50 °C im Umlufttrockenschrank getrocknet.

Als Trockengut erhielt ein Acetylperoxyborat in Form eines äußerst stabilen weißen Pulvers mit folgender Zusammensetzung und folgenden Eigenschaften.
Aktivsauerstoff-Gehalt: 6,1 Gew.-%
In Wasser freisetzbarer Gehalt an PES : 28 Gew.-%
In Wasser freisetzbarer Gehalt an H₂O₂: 0,4 Gew.-%
IR (KCl, cm⁻¹): 1748; 1661
¹³C-CP/MAS-NMR: 18,5 ppm

- DSC:: endothermer Peak (Maximum) etwa bei 160 °C
exothermer Peak (Maximum) etwa bei 172 °C

### Beispiel 6:

Zunächst wurden 40 g eines Natriumperoxoborates mit einem Molverhältnis von Natrium zu Bor von 0,6:1 und einem Molverhältnis von Bor zu Aktivsauerstoff von 1:1,1 (Aktivsauerstoffgehalt 20 Gew.-%) und 120 g Essigsäure (96 gew.-%ig) innerhalb von 20 h bei 30 °C unter Rühren zu einer homogenen Paste umgesetzt. Das Molverhältnis Na:B:Oa:Essigsäure im Reaktionsgemisch betrug somit 0,6:1:1,1:4,2. Anschließend wurde die erhaltene Paste durch Zusatz von 100 ml Essigsäureethylester in eine sprühfähige Suspension überführt, welche danach bei Ablufttemperaturen von 100 bis 105 °C in einem Sprühtrockner versprüht wurde.

Als Sprühgut erhielt man ein trockenes Acetylperoxyborat mit folgender Zusammensetzung und folgenden Eigenschaften.
Aktivsauerstoff-Gehalt: 6,6 Gew.-%
In Wasser freisetzbarer Gehalt an PES : 25 Gew.-%
In Wasser freisetzbarer Gehalt an H₂O₂: 2,8 Gew.-%

- DSC:: endothermer Peak (Maximum) etwa bei 152 °C
exothermer Peak (Maximum) etwa bei 170 °C

### Beispiel 7:

61,4 g einer nach Beispiel 4 a) hergestellten Peressigsäure-Lösung wurde mit 20 g Borax B (16,3 Gew.-% Bor; etwa 3 Hydratwasser entsprechend Borax-Trihydrat) entsprechend einem Molverhältnis Na:B:PES von 0,5:1:0,67 während 3 h bei 35 °C zu einer Paste umgesetzt. Anschließend wurde die Paste mit 150 ml Essigsäureethylester in eine sprühfähige Suspension überführt, welche danach bei Ablufttemperaturen von 100 bis 110 °C in einem Sprühtrockner versprüht wurde.

Als Sprühgut erhielt man ein Acetylperoxyborat mit folgender Zusammensetzung und folgenden Eigenschaften.
Aktivsauerstoff-Gehalt: 4,6 Gew.-%
In Wasser freisetzbarer Gehalt an PES : 21,5 Gew.-%
In Wasser freisetzbarer Gehalt an H₂O₂: 0,1 Gew.-%

- DSC:: endothermer Peak (Maximum) etwa bei 150 °C
exothermer Peak (Maximum) etwa bei 175 °C

### Beispiel 8:

30,3 g einer nach Beispiel 4 a) hergestellten Peressigsäure-Lösung wurden mit 10 g Borax C (20,8 Gew.-% Bor) versetzt und 3 h bei 35 °C gerührt. Die erhaltene Suspension wurde anschließend mit 100 ml Essigsäureethylester versetzt und in einem konventionellen Sprühtrockner bei Ablufttemperaturen von 115 °C versprüht.

Als Sprühgut erhielt man ein trockenes Acetylperoxyborates mit folgender Zusammensetzung und folgenden Eigenschaften.
Aktivsauerstoff-Gehalt: 5,7 Gew.-%
In Wasser freisetzbarer Gehalt an PES : 25 Gew.-%
In Wasser freisetzbarer Gehalt an H₂O₂: 1 Gew.-%

- DSC:: endothermer Peak (Maximum) etwa bei 140 °C
exothermer Peak (Maximum) etwa bei 170 °C

### Beispiel 9:

a) Zunächst wurde aus 84 Gewichtsanteilen technischer Essigsäure (96 Gew-%ig), 15 Gewichtsanteilen Wasserstoffperoxid (85 Gew.-%ig) und 1 Gewichtsanteil konzentrierter Schwefelsäure eine Mischung hergestellt, die ca. 1,5 h bei 35 °C gerührt wurde. Anschließend wurde diese Mischung mit Acetanhydrid (17 Gewichtsanteile bezogen auf die Gesamtmenge) versetzt und eine weitere Stunde bei 35 °C gerührt. Die derart hergestellte präformierte Peressigsäurelösung enthielt 22 Gew.-% Peressigsäure, 71 Gew.-% Essigsäure, 0,5 Gew-% Wasserstoffperoxid und 6,5 Gew.-% Wasser.
b) Die vorstehend hergestellte Peressigsäurelösung wurde mit Borax B (18 Gew.-% Bor) bei einem Bor:Peressigsäure-Molverhältnis von 1:0,55 3 Stunden bei 40 °C umgesetzt. Man erhielt ein pastöses bis festes Produkt, welches anschließend durch Trocknung am Rotationsverdampfer ein Acetylperoxyborat mit einem in Wasser freisetzbaren Peressigsäuregehalt von 28 Gew.-% lieferte. Die weiteren analytischen Daten entsprachen denjenigen des in Beispiel 4 angegebenen Produktes.

### Beispiel 10:

3290 g einer gemäß Beispiel 9 a) präformierten Peressigsäurelösung wurden mit 1000 g Borax B (18,3 Gew.-% Bor) und 35 g 1,1-Hydroxyethandiphosphonsäure (60 gew.-%ig in H₂O) in einem Vakuum-Intensivmischer unter Normaldruck während 4 h bei 35 °C zu einer Paste umgesetzt. Anschließend wurde die Paste in diesem Mischer im Vakuum 1 h bei 50 °C getrocknet. Hierbei wurde zu einem Granulat mit Partikelabmessungen von ca. 1 bis 3 mm granuliert. Das hergestellte Granulat wurde danach noch im Umlufttrockenschrank 3 h bei 50 °C nachgetrocknet. Man erhielt ein trockenes, freifließendes Granulat mit folgender Zusammensetzung und folgenden Eigenschaften:
Aktivsauerstoff-Gehalt: 5,6 Gew.-%
In Wasser freisetzbarer Gehalt an PES: 26 Gew.-%
In Wasser freisetzbarer Gehalt an H₂O₂: 0,2 Gew.-%

- DSC:: endothermer Peak (Maximum) etwa bei 167 °C
exothermer Peak (Maximum) etwa bei 181 °C

### Beispiel 11:

282 g einer präformierten Peressigsäure der Zusammensetzung 25 Gew.-% PES und 1,8 Gew.-% H₂O₂ wurde unter Rühren zu einem Gemisch aus 64,4 g Boroxid (B₂O₃) und 76,7 g Natriumacetat gegeben. Im Reaktionsgemisch lag ein Molverhältnis Na:B:PES von 0,5:1:0,5 vor. Die Reaktionstemperatur wurde auf 35 °C gehalten. Nach einer Stunde erhielt man eine Paste, die im Wasserstrahlvakuum zunächst 2 h bei 40 °C und nachfolgend noch 1 h bei 50 °C getrocknet wurde. Das hergestellte Acetylperoxyborat wies einen in Wasser freisetzbaren Gehalt an PES von 27 Gew.-% auf.

### Beispiel 12:

Zur Untersuchung der Stabilität wurden die in den Beispielen 1 bis 11 erhaltenen Produkte auf ihre Trockenstabilität untersucht. Zur Bestimmung der Trockenstabilität wurden die zu untersuchenden Proben den in Tabelle 1 angegebenen Bedingungen ausgesetzt und danach der durch Zersetzung bedingte Verlust an Aktivsauerstoff aus Peressigsäure ermittelt.

Die Bestimmung des Aktivsauerstoff-Gehaltes vor und nach der in Tabelle 1 angegebenen Behandlung erfolgte durch an sich bekannte titrimetrische Methoden. Tabelle 1 gibt einen Überblick über die Bedingungen und die erhaltenen Ergebnisse.

**Tabelle 1**

| Stabilitätstests Beispiel 12 | | |
|---|---|---|
| Beispiel | Testbedingungen | Avox-Verlust in % |
| | | |

| a) Offene Lagerung im Trockenschrank | | |
|---|---|---|
| 1 | 60 °C / 4 Wochen | 6 |
| 2 | 60 °C / 4 Wochen | 5 |
| 3 | 60 °C / 4 Wochen | 15 |
| 9 | 60 °C / 5 Wochen | 5 |
| 9 | 60 °C / 6 Monate | 16 |

| b) Kurzzeitstabilität bei erhöhter Temperatur | | |
|---|---|---|
| 5 | 100 °C / 1 h | 4,4 |
| 6 | 100 °C / 1 h | 11 |
| 7 | 100 °C / 1 h | 8 |
| 8 | 100 °C / 1 h | 10 |
| 10 | 100 °C / 1 h | 5 |
| PBS-1* (Vergleich) | 100 °C / 1 h | 7-10 |

| c) Lagerung in geschlossener Polyethylenflasche | | |
|---|---|---|
| 2 | 20 °C / 420 Tage | 13 |
| 5 | 20 °C / 205 Tage | 9 |
| 6 | 20 °C / 337 Tage | 14 |
| 10 | 20 °C / 120 Tage | 1,8 |

| | | |
|---|---|---|
| (*Aktivsauerstoff aus H₂O₂) | | |

### Beispiel 13:

Die Wirksamkeit der erfindungsgemäßen Acetylperoxyboratverbindungen als Bleichmittel in Vollwaschmitteln (a) und als bleichendes Waschadditiv (b) wurde anhand beispielhafter Testanschmutzungen und im Vergleich zu üblichen Bleichmittelsystemen untersucht.

Die Waschversuche wurden entweder in einer Laboranlage des Typs Linitest oder in einer marktüblichen Frontlader-Haushaltswaschmaschine vom Typ Miele Sensor-Elektronik W 784 durchgeführt. Die Waschtemperaturen betrugen 40 °C oder 60 °C. Gewaschen wurden Gewebe mit Testanschmutzungen unter Zusatz von jeweils 2 kg weißer Webhandtücher als Beipackmaterial.

Als Testgewebe wurden folgende kommerziell erhältliche Webwarenabschnitte mit ganzflächigen Kontaminationen von Tee oder Rotwein eingesetzt:
- Testgewebe WFK Tee 106; rein baumwollenes Testgewebe der Wäschereiforschung Krefeld mit Teeanschmutzung;
- Testgewebe EMPA Rotwein 114; rein baumwollenes Testgewebe der eidgenössischen Materialprüfungs- und Versuchsanstalt in St. Gallen (Schweiz) mit Rotweinanschmutzung.

Ferner wurde ein selbstpräpariertes Testgewebe eingesetzt:
- Testgewebe BW/PE; Mischwebware aus Baumwolle/Polyester (50/50) mit einem Quadratmetergewicht von 240 g und Testanschmutzungen Tee (BW/PE Tee) oder Rotwein (BW/PE Rotwein).

Als Waschkomponenten fanden phosphatfreie, zeolithhaltige Grundpulver marktgängiger Handelsprodukte ohne Aktivsauerstoffträger, ein handelsübliches aktivsauerstoffhaltiges Marken-Vollwaschmittel sowie marktübliche Flüssigwaschmittel Verwendung. Die Einsatzmengen richteten sich nach den Dosierempfehlungen der Hersteller. Den Waschkomponenten wurden die erfindungsgemäßen Bleichmittel bzw. zum Vergleich übliche Bleichsysteme zugesetzt. Die Dosierung der erfindungsgemäßen Verbindungen und der Vergleichssubstanzen erfolgte entweder in gleicher Gewichtsmenge (Gewichts-gleich) oder mengengleich bezüglich des eingesetzten Aktivsauerstoffgehaltes (Oa-gleich). Als Vergleichssubstanzen dienten folgende Bleichmittelsysteme:
- Natriumperborat-Tetrahydrat/TAED zur in situ-Erzeugung von Peressigsäure gemäß einer üblichen Formulierung mit einem durchschnittlichen Gehalt von 20 Gew.-% Natriumperborat-Tetrahydrat und 4 Gew.-% TAED in vollformulierten Vollwaschmitteln;
- DPDDA (Diperoxydodecandisäure) als Beispiel für eine übliche, feste Percarbonsäure;
- Fleckensalze auf Basis von Natriumpercarbonat oder Natriumperborat-Monohydrat und TAED.

Als Waschergebnis wurde der Entfärbungsgrad in % als Durchschnittswert aus jeweils 10 Einzelmessungen ermittelt, wobei auf nicht angeschmutztes Vergleichsgewebe mit 100 % und auf das angeschmutzte, ungewaschene Gewebe mit 0 % bezogen wurde. Der Entfärbungsgrad wurde durch Helligkeitsmessung mit einem Remissionsmeßgerät bei einer Lichtwellenlänge von 456 nm gegen Bariumsulfat als Standard bestimmt. Es wurden die nachfolgend zusammengestellten Ergebnisse erhalten.

### a) Wirksamkeit der erfindungsgemäßen Verbindungen in Vollwaschmitteln

Für die in der nachfolgenden Tabelle 2 zusammengestellten Waschversuche und -ergebnisse wurden die erfindungsgemäßen Verbindungen und die Vergleichssubstanzen in ein marktübliches, phosphatfreies Basiswaschmittelpulver ohne Aktivsauerstoffträger eingebracht.

**Tabelle 2**

| Waschversuche, Beispiel 13a) | | | | | | | |
|---|---|---|---|---|---|---|---|
| Nr. | Bleichmittel | | Bedingungen | Entfärbungsgrad in % bei Gewebe | | | |
| | Typ | relative Mengen | | BW | | BW/PE | |
| | | | | Tee¹⁾ | Rotwein²⁾ | Tee³⁾ | Rotwein⁴⁾ |
| A 1 | PBS-4/TAED | Oa-gleich | 40 °C, Waschmaschine | 34 | -- | -- | 23 |
| A 2 | DPDDA | " | " | 38 | -- | -- | 29 |
| A 3 | Acetylperoxyborat | " | " | 42 | -- | -- | 28 |
| B 1 | DPDDA | Gewichtsgleich | 60 °C, Waschmaschine | 25 | 22 | 13 | 8 |
| B 2 | Acetylperoxyborat | " | " | 47 | 34 | 36 | 22 |
| C 1 | - | - | 60 °C, Linitest | 22 | 12 | -- | -- |
| C 2 | PCS | Gewichtsgleich | " | 27 | 18 | -- | -- |
| C 3 | PBS-4/TAED | " | " | 27 | 18 | -- | -- |
| C 4 | Acetylperoxyborat | " | " | 52 | 32 | -- | -- |
| C 5 | Acetlyperoxyborat | Oa-gleich zu C2 | " | 39 | 24 | -- | -- |
| A1, A2, B1, C1 bis C3 = Stand der Technik; A3, B2, C4 und C5 = erfindungsgemäß | | | | | | | |

| | | | | | | | |
|---|---|---|---|---|---|---|---|
| ¹⁾ Testgewebe WFK Tee 106 | | | | | | | |
| ²⁾ Testgewebe EMPA Rotwein 114 | | | | | | | |
| ³⁾ selbst präpariertes Testgewebe Baumwolle/Polyester (50/50) mit Tee-Anschmutzung | | | | | | | |
| ⁴⁾ selbst präpariertes Testgewebe Baumwolle/Polyester (50/50) mit Rotwein-Anschmutzung | | | | | | | |

### b) Wirksamkeit der erfindungsgemäßen Verbindungen als bleichendes Waschadditiv

Für die in Tabelle 3 zusammengestellten Waschversuche und -ergebnisse wurden die erfindungsgemäßen Verbindungen und die Vergleichssubstanzen in folgende Waschkomponenten eingebracht:
- W =: vollformuliertes, marktübliches Markenwaschmittel (mit Bleichkomponente);
- F =: marktübliches Flüssigwaschmittel.

### Beispiel 14:

Die erfindungsgemäßen Acetylperoxyborat-Verbindungen wurden auf ihre Desinfektionswirkung hin, insbesondere im Hinblick auf die mikrobizide Wirksamkeit, geprüft (DLG-Suspensionstest). Die Einwirkzeit betrug 2,5 Minuten, die Abtötungsrate wurde in Abhängigkeit von der Inkubationstemperatur (20 °C und 40 °C ) und von dem pH-Wert ermittelt. Die eingesetzten Testorganismen waren Klebsiella aerogenes, Pseudomonas fluorescens, Staphylococcus aureus, Streptococcus faecalis.

Es wurden die folgend zusammengefaßten Ergebnisse erhalten. Bei einem pH-Wert von 2,0 töten die erfindungsgemäßen Acetylpeoxyborate in einer Konzentration von 0,008 % (= 80 mg/l) bei 20 °C die vier getesteten Bakterien in 2,5 Minuten sicher ab. Es ist damit leistungsstärker als an sich marktübliche Desinfektionsmittel, die in etwa 8,4 % PES und etwa 17 Gew.-% H₂O₂ enthalten. Bei einem pH-Wert von 5,6 werden die getesteten Bakterien bei einer Konzentration von 0,01 Gew.-% sicher abgetötet. Durch eine Temperaturanhebung von 20 °C auf 40 °C kann noch eine geringfügige Erhöhung der Mikrobizidie bewirkt werden. In einer weiteren Testreihe wurde als Testorganismus auch Pseudomonas aeruginosa eingesetzt. Dieser Keim wird bei Umgebungstemperaturen mit Konzentrationen von 74 mg/l sicher abgetötet. Ferner wurde gefunden, daß die erfindungsgemäßen Acetylperoxyborate nicht nur gegen Bakterien, sondern auch gegen Pilze und Viren wirksam sind.

Die Ergebnisse der Desinfektionstests weisen die erfindungsgemäßen Acetylperoxyborate als hervorragende Desinfektionsmittel, insbesondere im sauren bis neutralen pH-Wert-Bereich aus. Sie eignen sich somit beispielsweise gut für die Desinfektion im Klinikbereich, im Bereich der Tiermedizin, der Stalldesinfektion oder z.B. auch der Molkereihygiene.

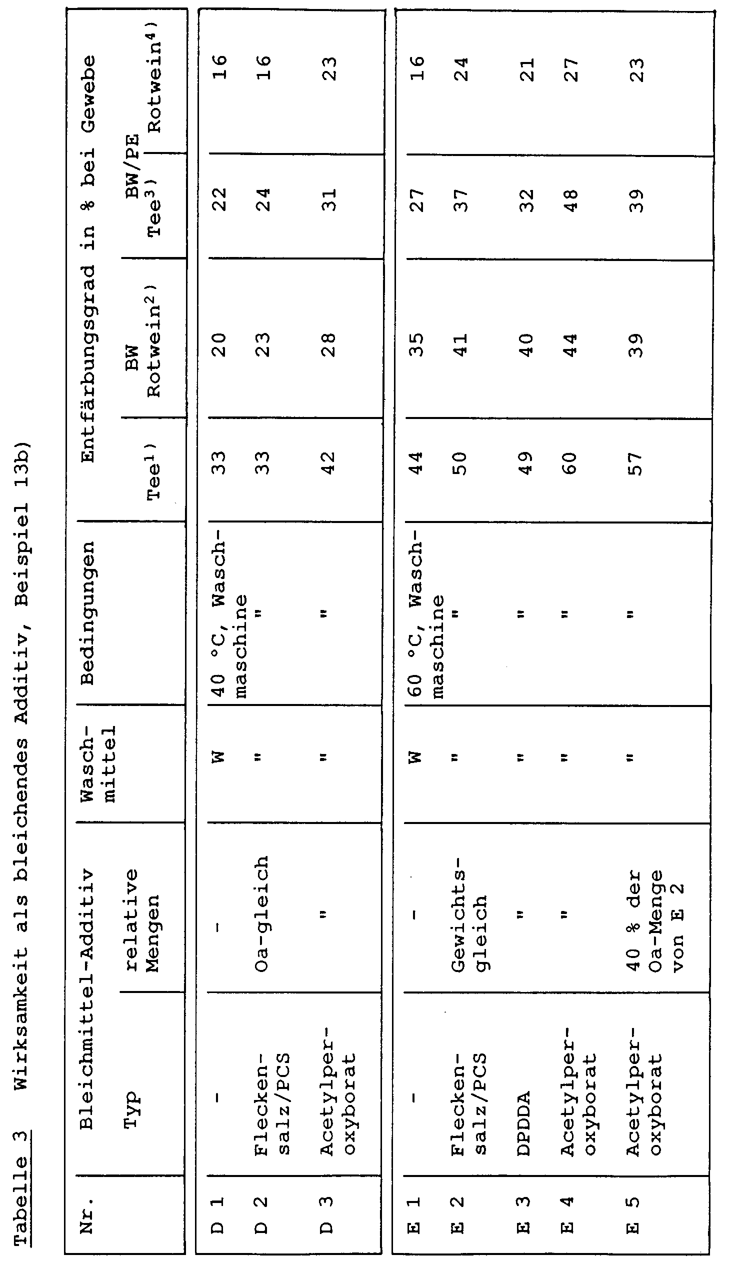

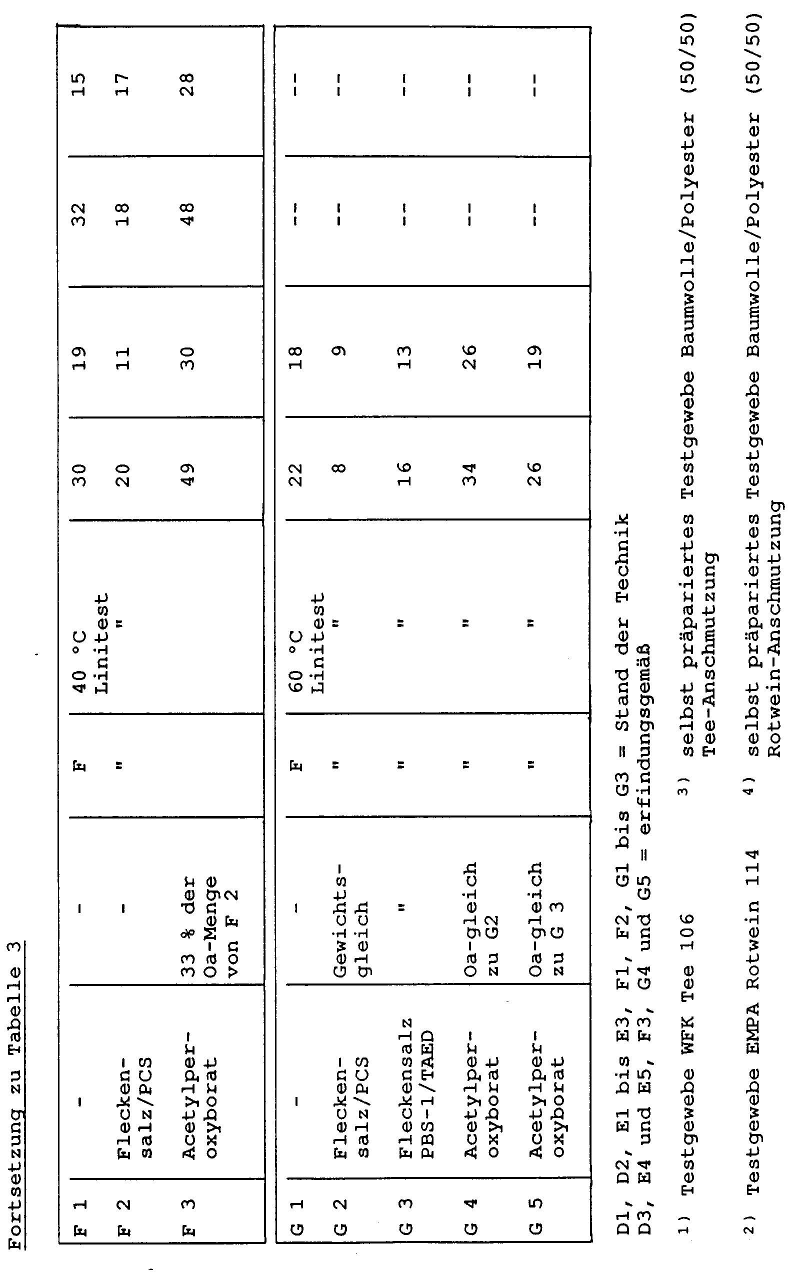

### Beispiel 15:

| | | |
|---|---|---|
| Einsatzstoffe: | - Peressigsäurelösung mit 21,4 % PES, 1 % H₂O₂ hergestellt aus | |
| | Essigsäure 99 % | 19 kg |
| | Wasserstoffperoxid 85 % | 3,4 kg |
| | Essigsäureanhydrid | 3,2 kg |
| | Schwefelsäure | 0,22 kg |
| | Turpinal SL | 0,3 kg |
| | - Borax (B=18,37 %) | 8,02 kg |
| | - Acetylperoxyborat-Keime | 2,0 kg |
| | - Mg-Stearat | 0,15 kg |
| (alle %-Angaben in Gew.-%) | | |

### a) Präformierte Peressigsäure

Mit Schwefelsäure versetztes Wasserstoffperoxid und Acetanhydrid wurden gleichzeitig aber getrennt so zur Essigsäure dosiert, daß eine Temperatur von etwa 25 °C eingehalten wurde. Nach Zusatz von Turpinal SL (1-Hydroxyethan-1,1-diphosphonsäure) wurde noch 1 h auf 35 °C erwärmt. Man erhielt eine wasserarme Peressigsäurelösung folgender typischer Zusammensetzung:
21,4 Gew.-% PES, 1 Gew.-% H₂O₂.

### b) Borrohstoff (= Borsauerstoff-Verbindung)

Zur Herstellung des Borrohstoffes wurde Boraxpentahydrat in einem Trockner bis auf einen analytisch bestimmten Borgehalt von ca. 18,4 Gew.-% getrocknet.

### c) Acetylperoxyborat

Die unter a) und b) dieses Beispiels hergestellten Rohstoffe wurden in einem Vakuum-Turbulenzmischer, der mit rotierenden Mischflügeln (Fr >1), rotierender Stiftmühle (Fr >>1) sowie Kühl-/Heizmantel ausgestattet war, gemeinsam mit dem aus der Siebung als Unter- und Oberkorn erhaltenen Acetylperoxyborat vereint und bei 35 °C zu einer Paste umgesetzt. Die Umsetzungszeit betrug etwa 50 min. Vor Beginn der Vakuumtrocknung wurde Magnesiumstearat zugesetzt und bei einer Produkttemperatur von 35 bis 55 °C (bei etwa 60 bis 70 °C Mantelheizung) und einem Vakuum von 50 bis 100 mbar überschüssige Essigsäure und Wasser entfernt. Die Umfangsgeschwindigkeit der Mischflügel betrug während der Umsetzung und Trocknung ca. 4 m/s (Fr etwa 9). Während dieser Trocknung stieg die Viskosität bis zum Erreichen der Umbruchphase an. Während des Umbruchs wurde die Umfangsgeschwindigkeit der Mischflügel auf ca. 1,5 m/s (Fr etwa 1,1) gesenkt. Nach Überschreiten der Umbruchsphase, d.h. mit beginnendem Zerfall der Masse wurde für 10 min die Stiftmühle zugeschaltet (Umfangsgeschwindigkeit etwa 22 m/s, Fr etwa 700). Dabei bildete sich das körnige Granulat. Anschließend wurde bei einer Umfangsgeschwindigkeit der Mischflügel von 4 m/s weitergetrocknet bis das Produkt rieselfähig war.

19 kg des Granulates aus der vorstehenden ersten Trocknungsstufe wurden auf Korngrößen von 0,4 bis 5 mm abgesiebt und die Fein- und Grobanteile (3,1 kg) der nachfolgenden Acetylperoxyborat-Herstellung zugeführt.

Das so abgesiebte Produktgranulat wurde zur Nachtrocknung der zweiten Trocknungsstufe zugeführt. Hierzu wurde das Granulat im Wirbelbett durch Lufttrocknung bei einer Wirbelbettemperatur bei etwa 60 °C 1 h getrocknet. Der Trocknungsverlust betrug hierbei etwa 8 bis 10 Gew.-%. Man erhielt ca. 14,3 kg eines Acetylperoxyborat-Granulates mit folgender Zusammensetzung und folgenden Eigenschaften:

| | |
|---|---|
| Natrium | 9,1 Gew.-% (acidimetrisch) |
| Bor | 9,6 Gew.-% (acidimetrisch) |
| Essigsäure | 23,6 Gew.-% (acidimetrisch) |
| Peressigsäure | 26,5 Gew.-% (iodometrisch) |
| H₂O₂ | 0,2 Gew.-% (cerometrisch) |

Lösegeschwindigkeit: 97 % nach 3 Minuten (2 g/l, 20 °C, 200 Upm)

Korngrößenanalyse:
> 2,5 mm: 3,4 Gew.-%
> 1,0 mm: 39,4 Gew.-%
> 0,8 mm: 18,4 Gew.-%
> 0,63 mm: 19,9 Gew.-%
> 0,4 mm: 18,2 Gew.-%
> 0,4 mm: 0,7 Gew.-%

Schüttdichte: 0,8 kg/l

Stabilitätsbestimmungen (typische Werte; % = Gew.-%):
- Avox-Verlust bei 110 °C/15 h : 9 %
- Avox-Verlust im geschlossenen Gefäß bei 20 °C/6 Monate : 1 %
- Avox-Verlust im geschlossenen Gefäß bei 40 °C/4 Wochen : 2-3 %

Microcalorische Daten bei 40 °C in geschlossener Glasampulle:
- ca. 10 µW/g für das nachgetrocknete Produkt
- ca. 400 µW/g für das vorgetrocknete Produkt

## Patentansprüche

1. Feste Acetylperoxyborat-Verbindungen, gekennzeichnet durch einen Aktivsauerstoff-Gehalt von 2 bis 8 Gew.-% und durch einen beim Lösen der Acetylperoxyborat-Verbindung in Wasser freisetzbaren Gehalt an Peressigsäure von wenigstens 10 Gew.-%, vorzugsweise von 10 bis 30 Gew.-%, und an Wasserstoffperoxid von unter 4 Gew.-%.

2. Acetylperoxyborat-Verbindungen nach Anspruch 1, dadurch gekennzeichnet, daß der beim Lösen der Acetylperoxyborat-Verbindung in Wasser freisetzbare Gehalt an Wasserstoffperoxid unter 3 Gew.-%, vorzugsweise unter 1,5 Gew.-%, beträgt.

3. Acetylperoxyborat-Verbindungen nach Anspruch 1, dadurch gekennzeichnet, daß der beim Lösen der Acetylperoxyborat-Verbindung in Wasser freisetzbare Gehalt an Peressigsäure 20 bis 30 Gew.-% beträgt.

4. Acetylperoxyborat-Verbindungen nach Anspruch 1, gekennzeichnet durch charakteristische IR-Banden im Bereich von etwa 1650 bis 1670 cm⁻¹ und im Bereich von etwa 1740 bis 1755 cm⁻¹.

5. Acetylperoxyborat-Verbindungen nach Anspruch 1, gekennzeichnet durch eine charakteristische ¹³C-NMR-Bande (Festkörperspektroskopie) im Bereich von 18 bis 19 ppm, vorzugsweise bei etwa 18,5 ppm, gemessen gegen Tetramehtylsilan (TMS) als externen Standard.

6. Acetylperoxyborat-Verbindungen nach Anspruch 1, gekennzeichnet durch ein endotherm bei etwa 135 bis 140 °C beginnendes und in einen exothermen Verlauf mit exothermem Peak-Maximum im Bereich von etwa 170 bis 185 °C übergehendes Differenzkalometriediagramm.

7. Wasch-, Reinigungs-, Bleich- und Desinfektionsmittelzusammensetzungen sowie Oxidationsmittel für die organische Synthese, vorzugsweise feste Bleich- und Desinfektionsmittelzusammensetzungen, enthaltend eine Acetylperoxyborat-Verbindung gemäß einem der Ansprüche 1 bis 6.

8. Feste Bleich- und Desinfektionsmittelzusammensetzungen nach Anspruch 7 in Form von Pulvern oder Granulaten in einem Sachet oder in Form einer in einer Folie eingeschweißten Tablette.

9. Verfahren zur Herstellung von festen Acetylperoxyborat-Verbindungen gemäß Anspruch 1, dadurch gekennzeichnet, daß man
a) eine feste Borsauerstoff-Verbindung mit Essigsäure und Wasserstoffperoxid, und/oder
b) eine feste Borsauerstoff-Verbindung mit einer Lösung von Peressigsäure in Essigsäure und/oder
c) eine feste Persauerstoff-haltige Borsauerstoff-Verbindung mit Essigsäure,
ggf. unter Zusatz von Acetanhydrid und in den Verfahrensvarianten a) und b) ggf. unter Zusatz von alkalischem Natriumsalz, zu einer viskosen Lösung, Suspension oder Paste umsetzt und die gebildete Acetylperoxyborat-Verbindung durch an sich bekannte Trocknungsverfahren gewinnt.

10. Verfahren nach Anspruch 9, dadurch gekennzeichnet, daß man die Umsetzung bei Temperaturen bis 60 °C, vorzugsweise bei Temperaturen von 30 bis 45 °C, durchführt.

11. Verfahren nach Anspruch 9, dadurch gekennzeichnet, daß man die Reaktanden in solchen Mengen einsetzt, daß in Verfahrensvariante
a) das Molverhältnis von Bor zu Acetylgruppen und zu Wasserstoffperoxid 1:(1 bis 5):(0,2 bis 2) beträgt, daß in Verfahrensvariante
b) das Molverhältnis von Bor zu Peressigsäure 1:(0,2 bis 2), vorzugsweise 1:(0,5 bis 1), beträgt und daß in Verfahrensvariante
c) das Molverhältnis von Persauerstoff-haltiger Borsauerstoff-Verbindung zu Acetylgruppen 1:(1 bis 10), vorzugsweise 1:(2 bis 6), beträgt.

12. Verfahren nach Anspruch 9, dadurch gekennzeichnet, daß man in Verfahrensvariante a) Wasserstoffperoxid mit einem H₂O₂-Gehalt von wenigstens 70 Gew.-% einsetzt.

13. Verfahren nach Anspruch 9, dadurch gekennzeichnet, daß in den Verfahrensvarianten a) und b) als Borsauerstoff-Verbindung Boroxid und/oder hydratwasserarmes bzw. hydratwasserfreies Borax eingesetzt wird.

14. Verfahren nach Anspruch 9, dadurch gekennzeichnet, daß in Verfahrensvariante c) als Persauerstoff-haltige Borsauerstoff-Verbindung hydratwasserarme bzw. hydratwasserfreie Natriumperborate mit einem Na:B-Molverhältnis von 0,3:1 bis 1:1 eingesetzt werden.

15. Verfahren nach Anspruch 14, dadurch gekennzeichnet, daß als Natriumperborate Natriumperborat-Monohydrat und/oder Natriumperborate mit einem Na:B-Molverhältnis von 0,4:1 bis 0,7:1 eingesetzt werden.

16. Verfahren nach Anspruch 9, dadurch gekennzeichnet, daß man die pastösen oder durch Zwischentrocknung erhaltenen Acetylperoxyborat-Verbindungen vor dem abschließenden Trocknen mit einem niedrigen Alkohol und/oder einem Ester dieses Alkohols mit Essigsäure wäscht.

17. Verfahren nach Anspruch 9, dadurch gekennzeichnet, daß man gemäß Verfahrensvariante b) in einem Mischer, der mit rotierendem Mischwerkzeug und zerkleinerndem Mischhilfswerkzeug, mit Wärmeaustauscheinrichtung zum Kühlen und Heizen sowie mit Vakuumeinrichtung ausgerüstet ist, wobei wenigstens das zerkleinernde Mischhilfswerkzeug durch eine Froudezahl Fr > 1, vorzugsweise Fr >> 1, charakterisiert ist,
b1) eine präformierte Lösung von Peressigsäure in Essigsäure und eine wasserarme Borsauerstoffverbindung so miteinander umsetzt, daß die Temperatur etwa 40 °C nicht übersteigt,
b2) Impfkristalle aus Acetylperoxyborat zusetzt und
b3) unter Mischen bei Temperaturen bis etwa 45 °C eine Paste des Acetylperoxyborates bildet,
b4) der Paste ggf. ein Gleitmittel zusetzt und die Paste im Vakuum bei einer Produkttemperatur bis etwa 60 °C, vorzugsweise von 35 bis 55 °C, bis zur Bildung eines körnigen Acetylperoxyborates vortrocknet,
wobei man im Verlaufe dieser Vortrocknung nach Überschreiten einer Umbruchphase beim beginnenden Zerfall der weitgehend vorgetrockneten Paste des Acetylperoxyborates für einen kurzen Zeitraum das zerkleinernde Mischhilfswerkzeug zuschaltet, und anschließend in Stufe b5) entweder
b5.1) das vorgetrocknete Acetylperoxyborat bei Normaldruck und einer Produkttemperatur bis etwa 80 °C, vorzugsweise bis etwa 60 °C, vollständig nachtrocknet und danach durch Sieben die gewünschte Kornfraktion des Acetylperoxyborates abtrennt oder
b5.2) zunächst durch Sieben des vorgetrockneten Acetylperoxyborates die gewünschte Kornfraktion des Acetylperoxyborates von den Grob- und/oder Feinanteilen abtrennt und danach nur die Fraktion mit gewünschter Korngröße bei Normaldruck bei einer Produkttemperatur bis etwa 80 °C, vorzugsweise bis etwa 60 °C, vollständig nachtrocknet,
wodurch man das Acetylperoxyborat in der Form eines festen, körnigen und rieselfähigen Granulates gewinnt.

18. Verfahren nach Anspruch 17, dadurch gekennzeichnet, daß in Stufe b1) als Borsauerstoff-Verbindung wasserarme Borax-Hydrate der Formel Na₂B₄O₇·(H₂O)₀₋₃, vorzugsweise Borax-Hydrate mit etwa 1 bis 2 Hydratwassern, eingesetzt werden.

19. Verfahren nach Anspruch 17, dadurch gekennzeichnet, daß die Impfkristalle in Stufe b2) in einer Menge wie diese beim Sieben in Stufe b5.1) oder b5.2) als Grob- und/oder Feinanteile anfällt, wenigstens aber in einer Menge von 2 Gew.-% bezogen auf das Reaktionsgemisch in Stufe b1), zugesetzt werden.

20. Verfahren nach Anspruch 17, dadurch gekennzeichnet, daß als Gleitmittel Alkali- und/oder Erdalkalimetallsalze von längerkettigen Fettsäuren, vorzugsweise Magnesiumstearat in Stufe b4) zugesetzt werden.

21. Verfahren nach Anspruch 20, dadurch gekennzeichnet, daß das Gleitmittel in einer Menge bis zu 5 Gew.-%, vorzugsweise in einer Menge von 0,2 bis 1 Gew.-%, bezogen auf das Reaktionsgemisch in Stufe b1) zugesetzt wird.

## Claims

1. Solid acetyl peroxyborate compounds characterised by an active oxygen content of 2 to 8% by wt. and by a content of peracetic acid, capable of being liberated on dissolution of the acetyl peroxyborate compound in water, of at least lO% by wt., preferably of 10 to 30% by wt., and a content of hydrogen peroxide of less than 4% by wt.

2. Acetyl peroxyborate compounds according to claim 1, characterised in that the content of hydrogen peroxide which can be liberated on dissolution of the acetyl peroxyborate compound in water is less than 3% by wt., preferably less than 1.5% by wt.

3. Acetyl peroxyborate compounds according to claim l characterised in that the content of peracetic acid capable of being liberated on dissolution of the acetyl peroxy borate compound in water amounts to 20 to 30% by weight.

4. Acetyl peroxyborate compounds according to claim 1 characterised by characteristic IR bands in the region of approximately 1650 to 1670 cm^{-l} and in the region of approximately 1740 to 1755 cm⁻¹.

5. Acetyl peroxyborate compounds according to claim 1 characterised by a characteristic ¹³C-NMR band (solid body spectroscopy) in the region of 18 to 19 ppm, preferably approximately 18.5 ppm, measured against tetramethyl silane (TMS) as external standard.

6. Acetyl peroxyborate compounds according to claim 1 characterised by a differential calorimetry diagram which begins endothermically at approximately 135 to 140°C and continues exothermically with an exothermic peak in the region of approximately 170 to 185°C.

7. Washing, cleaning, bleaching agent and disinfectant composition as well as oxidising agent for organic synthesis, preferably solid bleaching agent and disinfectant compositions containing an acetyl peroxyborate compound according to one of claims 1 to 6.

8. Solid bleaching agent and disinfectant composition according to claim 7 in the form of powdered or granular material in a sachet or in the form of a tablet fused into a film.

9. Process for the production of solid acetyl peroxyborate compounds according to claim 1 characterised in that
a) a solid boron oxygen compound is converted with acetic acid and hydrogen peroxide and/or
b) a solid boron oxygen compound is converted with a solution of peracetic acid in acetic acid and/or
c) a solid boron oxygen compound containing peroxygen is converted with acetic acid
if necessary with an addition of acetic anhydride and, according to process variants a) and b) if necessary with an addition of alkaline sodlum salt, to form a viscous solution, suspension or paste and the acetyl peroxyborate compound formed is obtained by drying processes known as such.

10. Process according to claim 9 characterised in that the reaction is carried out at temperatures of up to 60°C, preferably at temperatures of 30 to 45°C.

11. Process according to claim 9 characterised in that the reactants are used in such amounts that in process variant
a) the molar ratio of boron to the acetyl groups and to hydrogen peroxide is 1 : (1 to 5) : (0.2 to 2), that in process variant
b) the molar ratio of boron to peracetic acid is 1 : (0.2 to 2), preferably 1 : (0.5 to 1), and that in process variant
c) the molar ratio of peroxygen-containing boron oxygen compounds to the acetyl groups is 1 : (1 to 10), preferably 1 : (2 to 6).

12. Process according to claim 9 characterised in that, according to process variant a), hydrogen peroxide with an H₂0₂ content of at least 70% by wt. is used.

13. Process according to claim 9 characterised in that, according to process variants a) and b), boron oxide and/or borax with a low or zero content of water of hydration is used as the boron oxygen compound.

14. Process according to claim 9 characterised in that, according to process variant c), sodium perborate with a low or zero content of water of hydration and with an Na : B molar ratio of 0.3 : 1 to 1 : 1 is used as the boron oxygen compound containing peroxygen.

15. Process according to claim 14 characterised in that sodium perborate mono hydrate and/or sodium perborate with an Na : B molar ratio of 0.4 : 1 to 0.7 : 1 is used as sodium perborate.

16. Process according to claim 9 characterised in that the acetyl peroxyborate compounds obtained in paste form or by intermediate drying are washed with a lower alcohol and/or an ester of this alcohol before final drying.

17. Process according to claim 9, characterised in that, in accordance with process variant b), in a mixer which is provided with a rotary mixing tool and comminuting auxiliary mixing tool, with a heat exchange installation for cooling and heating and with a vacuum installation, at least the comminuting auxiliary mixing tool being characterised by a Froude number Fr > l, preferably Fr >> 1,
b1) a pre-formed solution of peracetic acid in acetic acid and a boron oxygen compound having a low water content are reacted with one another in such a way that the temperature does not exceed about 40°C,
b2) seed crystals of acetyl peroxyborate are added and
b3) a paste of the acetyl peroxyborate is formed by mixing at temperatures of up to about 45°C,
b4) a lubricant is optionally added to the paste and the paste is pre-dried under vacuum at a product temperature of up to about 60°C, preferably of 35 to 55°C, until a granular acetyl peroxyborate forms, the comminuting auxiliary mixing tool being switched on for a brief period in the course of this pre-drying, after passing through a break-up stage at the start of disintegration of the substantially pre-dried paste of acetyl peroxyborate, and subsequently, in step b5), either
b5.1) the pre-dried acetyl peroxyborate is completely post-dried under normal pressure and at a product temperature of up to about 80°C, preferably up to about 60°C, and the desired particle size fraction of the acetyl peroxyborate is then separated off by sieving, or
b5.2) the desired particle size fraction of the acetyl peroxyborate is first separated off from the coarse and/or fine fractions by sieving the pre-dried, acetyl peroxyborate and then only that fraction having the desired particle size is completely post-dried under normal pressure at a product temperature of up to about 80°C. preferably up to about 60°C,
by which means the acetyl peroxyborate is obtained in the form of solid, particulate and flowable granules.

18. Process according to claim 17, characterised in that in step b1), borax hydrates of formula Na₂B₄O-(H₂O)₀ ₋ ₃ having a low water content, preferably borax hydrates containing about 1 to 2 molecules of water of hydration, are employed as boron oxygen compound.

19. Process according to claim 17, characterised in that, in step b2) the seed crystals are added in an amount such as is obtained as coarse and/or fine fractions on sieving in step b5.1) or b5.2), but at least in an amount of 2 % by weight based on the reaction mixture in step b1).

20. Process according to claim 17, characterised in that alkali metal salts and/or alkaline earth metal salts of relatively long-chain fatty acids, preferably magnesium stearate, are added as lubricant in step b4).

21. Process according to claim 20, characterised in that the lubricant is added in an amount of up to 5 % by weight, preferably in an amount of 0.2 to 1 % by weight, based on the reaction mixture in step b1).

## Revendications

1. Composés acétylperoxyborates solides caractérisés par une teneur en oxygène actif de 2 à 8 % en poids et par une teneur en acide peracétique libérable lors de la mise en solution du composé acétylperoxyborate dans l 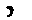 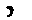 eau d 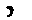 au moins 10 % en poids, de préférence de 10 à 30 % en poids et par une teneur en peroxyde d 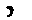 hydrogène inférieure à 4 % en poids.

2. Composés acétylperoxyborates selon la revendication 1, caractérisés en ce que la teneur en peroxyde d 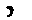 hydrogène libérable lors de la dissolution des composés acétylperoxyborates dans l 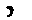 eau est inférieure à 3 % en poids, de préférence inférieure à 1,5 % en poids.

3. Composés acétylperoxyborates selon la revendication 1, caractérisés en ce que la teneur en acide peracétique libérable lors de la dissolution du composé acétylperoxyborate dans l 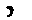 eau s 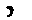 élève à 20 à 30 % en poids.

4. Composés acétylperoxyborates selon la revendication 1, caractérisés par des bandes IR caractéristiques dans la gamme d 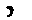 environ 1.650 à 1.670 cm⁻¹ et dans la gamme d 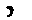 environ 1.740 à 1.755 cm⁻¹

5. Composés acétylperoxyborates selon la revendication 1, caractérisés par une bande RMN ¹³C (spectroscopie de matières solides) caractéristique dans la gamme de 18 à 19 ppm, de préférence à environ 18,5 ppm, mesurée par rapport au tétraméthylsilane (TMS) comme standard externe.

6. Composés acétylperoxyborates selon la revendication 1, caractérisés par un diagramme de calorimétrie différentielle commençant de manière endothermique à environ 135 à 140 °C et passant vers un déroulement exothermique avec un maximum de pic exothermique dans la gamme d 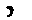 environ 170 à 185 °C.

7. Compositions d'agents de lavage, de nettoyage, de blanchiment et de désinfection, de même que des agents d 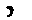 oxydation pour la synthèse organique, de préférence des compositions d'agents de blanchiment et de désinfection solides, qui contiennent un composé acétylperoxyborate selon l'une quelconque des revendications 1 à 6.

8. Compositions d'agents de blanchiment et de désinfection solides selon la revendication 7, sous forme de poudres ou de granulés dans un sachet ou sous forme d 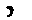 un comprimé scellé dans un film.

9. Procédé de préparation de composés acétylperoxyborates solides selon la revendication 1, caractérisé en ce qu 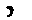 on convertit
a) un composé solide de bore et d 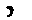 oxygène avec de l 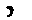 acide acétique et du peroxyde d 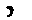 hydrogène, et/ou
b) un composé solide de bore et d 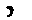 oxygène avec une solution d 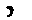 acide peracétique dans l 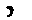 acide acétique et/ou
c) un composé solide de bore et d 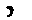 oxygène contenant un peroxyde avec l 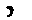 acide acétique,
éventuellement en ajoutant de l 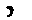 anhydride acétique, et dans les variantes de procédés a) et b) éventuellement en ajoutant du sel de sodium alcalin, en une solution, une suspension ou une pâte visqueuse et en ce que l 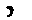 on récupère le composé acétylperoxyborate formé, par des procédés de séchage connus en soi.

10. Procédé selon la revendication 9, caractérisé en ce que la conversion est réalisée à des températures jusqu'à 60 °C, de préférence à des températures de 30 à 45 °C.

11. Procédé selon la revendication 9, caractérisé en ce qu'on utilise les réactifs par quantités telles, que dans la variante de procédé
a) le rapport molaire de bore aux groupes acétyles et au peroxyde d 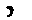 hydrogène vaut 1 : (1 à 5) : (0,2 à 2), que dans la variante de procédé
b) le rapport molaire de bore à l 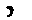 acide peracétique vaut 1 : (0,2 à 2), de préférence 1 : (0,5 à 1), et que dans la variante de procédé
c) le rapport molaire du composé de bore et d 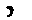 oxygène contenant du peroxyde par rapport aux groupes acétyles vaut 1 : (1 à 10), de préférence 1 : (2 à 6).

12. Procédé selon la revendication 9, caractérisé en ce qu'on utilise dans la variante de procédé a) du peroxyde d 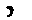 hydrogène avec une teneur en H₂O₂ d 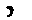 au moins 70 % en poids.

13. Procédé selon la revendication 9, caractérisé en ce qu'on utilise dans les variantes de procédé a) et b) à titre de composé de bore et d'oxygène, de l 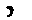 oxyde de bore et/ou du borax pauvre en eau d 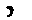 hydratation, respectivement exempt d 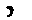 eau d 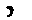 hydratation.

14. Procédé selon la revendication 9, caractérisé en ce qu'on utilise dans la variante de procédé c) à titre de composé de bore et d'oxygène, contenant du peroxyde, des perborates de sodium pauvres en eau d 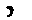 hydratation, respectivement exempts d 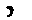 eau d 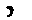 hydratation avec un rapport molaire de Na : B de 0,3 : 1 à 1 : 1.

15. Procédé selon la revendication 14, caractérisé en ce qu'on utilise à titre de perborates de sodium le monohydrate de perborate de sodium et/ou les perborates de sodium avec un rapport molaire de Na : B de 0,4 : 1 à 0,7 : 1.

16. Procédé selon la revendication 9, caractérisé en ce qu 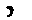 on lave les composés acétylperoxyborates pâteux ou résultant d 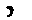 un séchage intermédiaire avant le séchage final avec un alcool inférieur et/ou avec un ester de cet alcool avec l 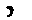 acide acétique.

17. Procédé selon la revendication 9, caractérisé en ce que, conformément à la variante de procédé b) dans un mélangeur, qui est muni d 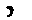 un outil d'agitation rotatif et d 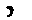 un outil d 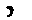 agitation auxiliaire réducteur, d'un dispositif d 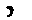 échange calorifique pour le refroidissement et le chauffage, de même que d 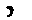 un dispositif de création d'un vide, où au moins l 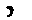 outil d 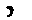 agitation auxiliaire réducteur est caractérisé par un nombre de Froude Fr > 1, de préférence Fr >> 1,
b1) on convertit ensemble une solution préformée d 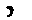 acide peracétique dans l 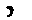 acide acétique et un composé de bore et d 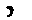 oxygène pauvre en eau de telle manière que la température ne dépasse pas environ 40 °C,
b2) on ajoute des cristaux d 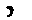 ensemencement d 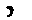 acétylperoxyborate et
b3) on forme par mélange à des températures jusqu'à environ 45 °C une pâte de l 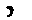 acétylperoxyborate,
b4) on ajoute à la pâte éventuellement un agent lubrifiant et on présèche la pâte sous vide à une température du produit jusqu'à environ 60 °C, de préférence de 35 à 55 °C jusqu'à la formation d 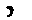 un acétylperoxyborate granulé,
étape pendant laquelle on met en marche au cours de ce préséchage après le dépassement d 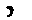 une phase de transition dès le commencement de la désagrégation de la pâte essentiellement préséchée de l 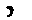 acétylperoxyborate, de l 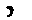 outil d 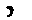 agitation auxiliaire réducteur pendant une courte période de temps, et qu 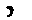 ensuite à l 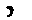 étape b5) soit
b5.1) on procède au séchage final complet de l 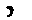 acétylperoxyborate préséché à pression normale et à une température du produit jusqu'à environ 80 °C, de préférence jusqu'à environ 60 °C et on isole ensuite par tamisage la fraction granulométrique souhaitée de l 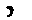 acétylperoxyborate, soit
b5.2) on isole d 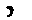 abord par tamisage de l 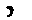 acétylperoxyborate préséché, la fraction granulométrique souhaitée de l 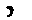 acétylperoxyborate des fractions fines et/ou grossières et on procède ensuite au séchage final complet uniquement la fraction avec la granulométrie souhaitée à pression normale, à une température du produit jusqu'à environ 80 °C, de préférence jusqu'à environ 60 °C,
procédé par lequel on récupère l 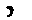 acétylperoxyborate sous forme d 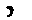 un granulé solide, en forme de grains et fluide.

18. Procédé selon la revendication 17, caractérisé en ce qu'on utilise à l'étape b1) à titre de composé de bore et d'oxygène, des hydrates de borax pauvres en eau d'hydratation, répondant à la formule Na₂B₄O₇.(H₂O)₀₋₃, de préférence des hydrates de borax avec environ 1 à 2 molécules d'eau d'hydratation.

19. Procédé selon la revendication 17, caractérisé en ce qu'on ajoute des cristaux d 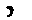 ensemencement à l 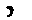 étape b2) en une quantité telle qu'elle est obtenue par tamisage à l'étape b5.1) ou à l'étape b5.2) sous forme de fractions fines et/ou grossières mais au moins en une quantité d 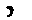 environ 2 % en poids par rapport au mélange réactionnel à l 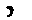 étape b1).

20. Procédé selon la revendication 17, caractérisé en ce qu'on ajoute à titre d'agent lubrifiant, des sels de métaux alcalins et/ou de métaux alcalinoterteux d 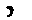 acides gras saturés supérieurs, de préférence le stéarate de magnésium à l 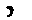 étape b4).

21. Procédé selon la revendication 20, caractérisé en ce qu'on ajoute l'agent lubrifiant en une quantité jusqu'à 5 % en poids, de préférence en une quantité de 0,2 à 1 % en poids, par rapport au mélange réactionnel à l 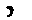 étape b1).
